# EUROPEAN PATENT APPLICATION

(11) **EP 3 903 919 A1**
(43) Date of publication of application: **03.11.2021**
(21) Application number: 19901472.1
(22) Date of filing: 25.12.2019
(51) Int. Cl.: B01F 9/02, B01F 15/06, A23L 7/10

(54) **INGREDIENT MIXER**

(30) Priority: 28.12.2018 JP 2018248052; 28.12.2018 JP 2018248053; 28.12.2018 JP 2018248056
(71) Applicant: KUBOTA CORPORATION, Osaka-shi, Osaka 556-8601 (JP)
(72) Inventor: YAMAUCHI Takashi, Sakai-shi, Osaka 590-0823 (JP); HAMAYOSHI Hirotoshi, Osaka-shi, Osaka 578-0921 (JP)
(74) Representative: Müller-Boré & Partner Patentanwälte PartG mbB
(86) International application number: PCT/JP2019/050914
(87) International publication number: WO 2020/138203

(57) **Abstract**

To provide an ingredient mixer (1) capable of improving a cooling performance. The ingredient mixer (1) includes a mixing drum (3) supported on the machine body rotatably about an axis of the mixing drum defining an axial direction thereof and configured to rotate to mix a plurality of ingredients housed in an inside thereof, and an air blower (19) to generate a cooling air that is fed to the inside of the mixing drum (3). The mixing drum (3) includes a drum body (6) having one and the other end surfaces in the axial direction, the one end surface being open to serve as an opening portion (7) of the drum body (6), and the other end surface being closed to serve as a bottom portion (5) of the drum body (6), and a drum lid (8) to close the opening portion (7) of the drum body (6). The drum lid (8) includes a body wall (105) tapered in the axial direction opposite to the bottom portion (5) of the drum body (6). The body wall (105) includes a cooling-air inlet (21) through which the cooling air is introduced to the inside of the mixing drum (3), and a cooling-air outlet (108) through which the cooling air is discharged from the inside of the mixing drum (3).

## Description

### [TECHNICAL FIELD]

The present invention relates to an ingredient mixer for mixing a plurality of ingredients, and to an ingredient mixer such as a vinegar mixer for mixing rice and vinegar (that is, blended vinegar) to prepare vinegared rice.

### [BACKGROUND ART]

An ingredient mixer disclosed in Patent document 1 is known.

The ingredient mixer disclosed in Patent document 1 has a mixing drum that is supported by a machine body rotatably around an axis and rotates to mix a plurality of ingredients housed therein.

The mixing drum has a drum body, one end of which is open toward in a direction of the axis and the other end of which is closed by a bottom portion, and a drum lid which closes the opening portion of the drum body.

The drum lid has a dome wall that gradually narrows in diameter from the opening of the drum body toward the opposite direction to the bottom portion in the direction of axis. At the top of dome wall, a cooling-air inlet is formed to introduce a cooling air generated by a blower into the mixing drum.

In addition, an agitating member is attached to the mixing drum to agitate the ingredients. A bottom convex portion protruding from the bottom portion is located on the bottom portion of drum body. A recess groove is formed corresponding to the protrusion of the bottom convex portion. The lower end of agitating member is inserted into this recess groove, thereby holding a lower portion of the agitating member.

### [RELATED ART DOCUMENTS]

### [PATENT DOCUMENTS]

[Patent document 1] Japanese Unexamined Patent Application Publication No. 2015-65924

### [DISCLOSURE OF THE INVENTION]

### [PROBLEMS TO BE SOLVED BY THE INVENTION]

In the ingredient mixer disclosed in Patent document 1, the cooling performance is insufficient because it is difficult to discharge the cooling air after the cooling the ingredient.

In addition, in the ingredient mixer of Patent document 1, since a lower end of the agitating member is inserted into and held by the recess groove formed corresponding to the protrusion of the bottom convex portion, a gap is created between the lower end of the agitating member and the bottom portion of the drum body, thereby deteriorating the agitation performance of the agitating member is reduced.

In addition, since there is no part by which the drum body is handled, it is difficult to handle the mixing drum, which is inconvenient when moving the mixing drum. In addition, when a handle grip is provided to the drum body, it may be difficult to take out ingredients from the drum body, so it is necessary to take account of the ease of taking out the ingredients.

Accordingly, the present invention intends to provide an ingredient mixer capable of improving a cooling performance.

In addition, the present invention intends to provide an ingredient mixer capable of improving an agitation performance while supporting a lower portion of the agitating member.

In addition, the present invention intends to provide an ingredient mixer allowing a drum body to be easily handled and an ingredient housed inside the drum body to be easily taken out.

### [MEANS OF SOLVING THE PROBLEMS]

In a first aspect of the present invention, an ingredient mixer includes a machine body, a mixing drum supported on the machine body rotatably about an axis of the mixing drum defining an axial direction thereof and configured to rotate to mix a plurality of ingredients housed in an inside thereof, and an air blower to generate a cooling air that is fed to the inside of the mixing drum. The mixing drum includes a drum body having one and the other end surfaces in the axial direction, the one end surface being open to serve as an opening portion of the drum body, and the other end surface being closed to serve as a bottom portion of the drum body, and a drum lid to close the opening portion of the drum body. The drum lid includes a body wall tapered in the axial direction opposite to the bottom portion of the drum body. The body wall includes a cooling-air inlet through which the cooling air is introduced to the inside of the mixing drum, and at least one cooling-air outlet through which the cooling air is discharged from the inside of the mixing drum.

The cooling-air inlet is formed at a top of the body wall, and the at least one cooling-air outlet is formed between the top and a base of the body wall opposite to the top.

The at least one cooling-air outlet includes a plurality of air outlets arranged at intervals in a circumferential direction of the mixing drum.

The air outlets are formed at symmetric positions with respect to a center of the drum lid.

The ingredient mixer includes an air-guide duct to guide the cooling air generated by the air blower to the cooling-air inlet. The air-guide duct includes a cooling-air feeding port that is located in vicinity of the cooling-air inlet and faces a center of the mixing drum.

An end portion of the cooling-air feeding port is parallel to the cooling-air inlet.

The ingredient mixer includes an agitating member attached to the mixing drum to agitate the ingredients. The drum lid includes a circumferential wall circumferentially surrounding a wall of the drum body defining the opening portion, and an annular wall extending inward from an end of the circumferential wall in a radial direction of the mixing drum, having a diametrically inner end connected to an end portion of the body wall on the opening portion side, and restricting the agitating member from moving in the axial direction.

The drum lid is configured to allow the agitating member to be housed inside the circumferential wall.

In a second aspect of the present invention, an ingredient mixer includes a machine body, a mixing drum supported on the machine body rotatably about an axis of the mixing drum defining an axial direction thereof and configured to rotate to mix a plurality of ingredients housed in an inside thereof, and at least one agitating member attached in the inside of the mixing drum to agitate the ingredients. The mixing drum includes a drum body having one and the other end surfaces in the axial direction of the mixing drum. The one end surface is open to serve as an opening portion of the drum body, and the other end surface is closed to serve as a bottom portion of the drum body. The at least one agitating member crosses the drum body in a transverse direction and contacts to the bottom portion of the drum body. The drum body includes at least one protrusion protruding from the bottom portion. The at least one protrusion is offset from the at least one agitating member in a direction crossing the transverse direction to contact the at least one agitating member.

The at least one agitating member includes a first agitating member located at an eccentric position with respect to the axis, and a second agitating member juxtaposed with the first agitating member in a radial direction of the mixing drum and located at another eccentric position opposite to the first agitating member with respect to the axis. The at least one protrusion includes a plurality of first protrusions opposite to the axis with respect to the first agitating member, and a plurality of second protrusions opposite to the axis with respect to the second agitating member.

The mixing drum includes an attachment plate attached to the bottom portion of the drum body and rotatably attached to the machine body. The at least one protrusion includes a protruding body formed integrally with the drum body to protrude from the bottom portion toward the opening portion; and a nut into which an attachment tool for attachment of the attachment plate is screwed, the nut being embedded in the protruding body.

The attachment plate includes an engagement claw configured to engage with the machine body to prevent the attachment plate from being separate from the machine body. The drum body includes, on the bottom portion, a housing recess portion configured to house the attachment plate.

The machine body includes a rotation shaft rotatable around the axis, a rotating disc to which the attachment plate is attached, and a fixture to fix the rotating disc to the rotation shaft. The bottom portion includes a recess portion to house a head of the fixture inserted through a through hole formed in the attachment plate. The through hole includes a small-diameter portion adjacent to the head of the fixture, and a large-diameter portion having a diameter larger than diameters of the small-diameter portion and the recess portion.

The machine body is provided with a plurality of rollers to guide rotation of the mixing drum. The drum body includes a retaining groove extending in the direction of the axis and configured to retain the at least one agitating member, and a cylindrical circumferential wall in contact with the rollers. The retaining groove is formed on an inner surface of the drum body, and the cylindrical circumferential wall is formed on a portion of the drum body closer to the bottom portion than the retaining groove. The at least one agitating member has a portion protruding from the retaining groove toward the bottom portion. The protrusions support the portion of the at least one agitating member protruding from the retaining groove toward the bottom portion.

In a third aspect of the present invention, an ingredient mixer includes a machine body, a mixing drum which is supported on the machine body rotatably around an axis defining an axial direction and which rotates to mix a plurality of ingredients housed in an inside thereof. The mixing drum includes a drum body having one and the other end surfaces in the axial direction. The one end surface is open to serve as an opening portion of the drum body, and the other end surface is closed to serve as a bottom portion of the drum body. The drum body includes a handle portion for holding the drum body. The handle portion includes an inwardly-protruding wall formed by partially protruding a wall of the drum body inwardly in a drum radial direction, and an inclined wall inclining outwardly in the drum radial direction and downwardly from an inner end of the inwardly-protruding wall in the drum radial direction.

The handle portion includes a first handle portion and a second handle portion opposed to the first handle portion in the radial direction.

The ingredient mixer includes at least one agitating member that is attached to the inside of the mixing drum to agitate ingredients. The at least one agitating member is located at an eccentric position with respect to the axis and transverses the drum body. The drum body includes at least one one-side retaining groove extended in the axial direction to hold one side of the at least one agitating member and adjacent to the first handle portion in a drum circumferential direction, and at least one other-side retaining groove extended in the axial direction to hold the other side of the at least one agitating member and adjacent to the second handle portion in the drum circumferential direction.

The at least one agitating member includes a first agitating member and a second agitating member juxtaposed in the radial direction of the mixing drum with the axis located between them, and the at least one one-side retaining groove includes a first retaining groove that retains one side of the first agitating member and a second retaining groove that retains one side of the second agitating member, and the at least one other-side retaining groove includes a third retaining groove that retains the other side of the first agitating member and a fourth retaining groove that retains the other side of the second agitating member. The first handle portion is extended from the first retaining groove to the second retaining groove, and the second handle portion is extended from the third retaining groove to the fourth retaining groove.

The mixing drum has a drum lid that closes an opening of the drum body. The drum lid includes a circumferential wall that circumferentially surrounds a wall of the drum body defining the opening portion, an annular wall portion that extends inward from an end of the circumferential wall in a radial direction of the mixing drum, and a body wall becoming gradually narrower from an inner circumferential end of the annular wall portion in the axial direction opposite to the bottom portion. The annular wall portion of the drum lid when closing the drum body restricts movement of the agitating member in the axial direction.

### [EFFECTS OF THE INVENTION]

According to the above-mentioned ingredient mixer, a cooling air after cooling ingredients is discharged from a cooling-air outlet, thereby improving the cooling performance.

In addition, according to the above-mentioned ingredient mixer, the agitating member can be supported by a protruding portion that protrudes from the bottom portion of the drum body and contacts to the agitating member from a direction crossing the transverse direction. Further, since the protruding portion is offset from the agitating member in a direction crossing the transverse direction and contacts to the agitating member, the lower end of the agitating member can contact to the bottom portion of the drum body, thereby improving the agitation performance. In this manner, it possible to improve the agitation performance while supporting the lower portion of the agitating member.

According to the above-mentioned ingredient mixer, a handle portion is formed to have an inwardly-protruding wall formed by protruding a part of wall constituting the drum body toward an inside of the mixing drum in a radial direction, and thereby making easier to handle the drum body.

Additionally, the sloping wall extends outwardly in the radial direction from an inside end of the inwardly-protruding wall toward the bottom portion, thereby allowing ingredients housed inside the mixing drum to be taken out smoothly.

### [BRIEF DESCRIPTION OF THE DRAWINGS]

FIG. 1 is an overall perspective view of an ingredient mixier.
FIG. 2 is a schematic side view of the ingredient mixer.
FIG. 3 is a schematic side cross-sectional view of the ingredient mixer.
FIG. 4 is a schematic plan cross-sectional view of the ingredient mixer.
FIG. 5 is an exploded perspective view of a machine body.
FIG. 6 is an enlarged view of a driving portion to drive a mixing drum.
FIG. 7 is a plan view of a rotating disc.
FIG. 8 is a plan view showing a state where the mixing drum is mounted on a mount base.
FIG. 9 is an exploded perspective view of the rotating disc.
FIG. 10 is a plan view of an upper through hole, a lower through hole, and an engagement groove.
FIG. 11 is a cross-sectional view showing FIG. 7 seen in an arrowed line of F1-F1.
FIG. 12 is a side cross-sectional view showing an attachment position of a support frame.
FIG. 13 is a side cross-sectional view showing a detachment position of a support frame.
FIG. 14 is a side view of the ingredient mixer in which the support frame takes the attachment position.
FIG. 15 is a side view of the ingredient mixer in which the support frame takes the detachment position.
FIG. 16 is a side view of an attachment portion of an operation lever.
FIG. 17 is a perspective view of the attachment portion of the operation lever.
FIG. 18 is a cross-sectional view of the attachment portion of the operation lever.
FIG. 19 is a perspective view of a rotating member.
FIG. 20 is a perspective view of an outside wall of a first swing frame.
FIG. 21 is a bottom view of a drum body.
FIG. 22 is a cross-sectional view showing FIG. 21 seen in an arrowed line of F2-F2.
FIG. 23 is a plan view of the drum body.
FIG. 24 is a cross-sectional view showing FIG. 23 seen in an arrowed line of F3-F3.
FIG. 25 is a cross-sectional view showing FIG. 23 seen in an arrowed line of F4-F4.
FIG. 26 is a cross-sectional view showing FIG. 21 seen in an arrowed line of F5-F5.
FIG. 27 is a cross-sectional view of an attachment portion of a ball member.
FIG. 28 is a plan view including a left view showing the mixing drum before rotated in a setting direction and a right view showing the mixing drum after rotated in the setting direction.
FIG. 29 is a plan view including an upper view showing the mixing drum before rotated in the setting direction and a lower view showing the mixing drum after rotated in the setting direction.
FIG. 30 is a plan view showing a relationship between an engagement claw and a locking groove.
FIG. 31 is a perspective view of the drum body.
FIG. 32 is a side view of the drum body.
FIG. 33 is a front view of the drum body.
FIG. 34 is a cross-sectional view showing FIG. 33 seen in an arrowed line of F6-F6.
FIG. 35 is a cross-sectional view showing FIG. 23 seen in an arrowed line of F7-F7.
FIG. 36 is a cross-sectional view showing FIG. 32 seen in an arrowed line of F8-F8.
FIG. 37 is a cross-sectional view showing FIG. 32 seen in an arrowed line of F9-F9.
FIG. 38 is a front view of a drum lid.
FIG. 39 is a plan view of the drum lid.
FIG. 40 is a cross-sectional view showing FIG. 39 seen in an arrowed line of F10-F10.
FIG. 41 is a cross-sectional view showing FIG. 39 seen in an arrowed line of F11-F11.
FIG. 42 is a cross-sectional view showing FIG. 38 seen in an arrowed line of F12-F12.
FIG. 43 is a perspective view of an agitating member.
FIG. 44 is a cross-sectional view showing FIG. 43 seen in an arrowed line of F13-F13.
FIG. 45 is a cross-sectional view showing FIG. 43 seen in an arrowed line of F14-F14.
FIG. 46 is a front view showing a state where the drum lid is retained by a retaining member together with the agitating member.
FIG. 47 is a side view showing the state where the drum lid is retained by the retaining member together with the agitating member.
FIG. 48 is a plan view showing a modified example of the drum lid.

### [BEST MODE FOR CARRYING OUT THE INVENTION]

With reference to the drawings, an embodiment of the present invention will be described below.

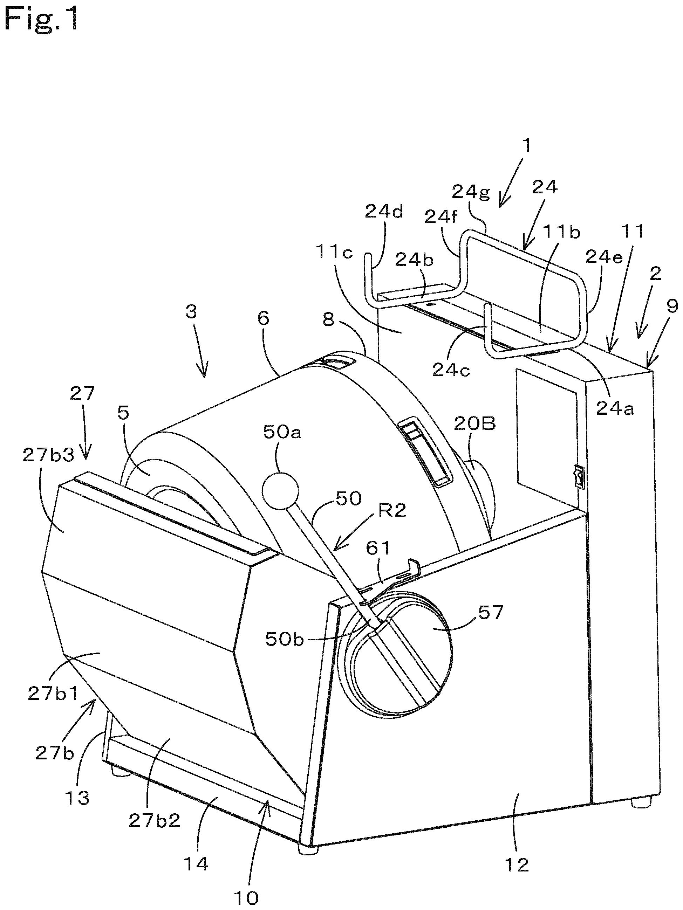

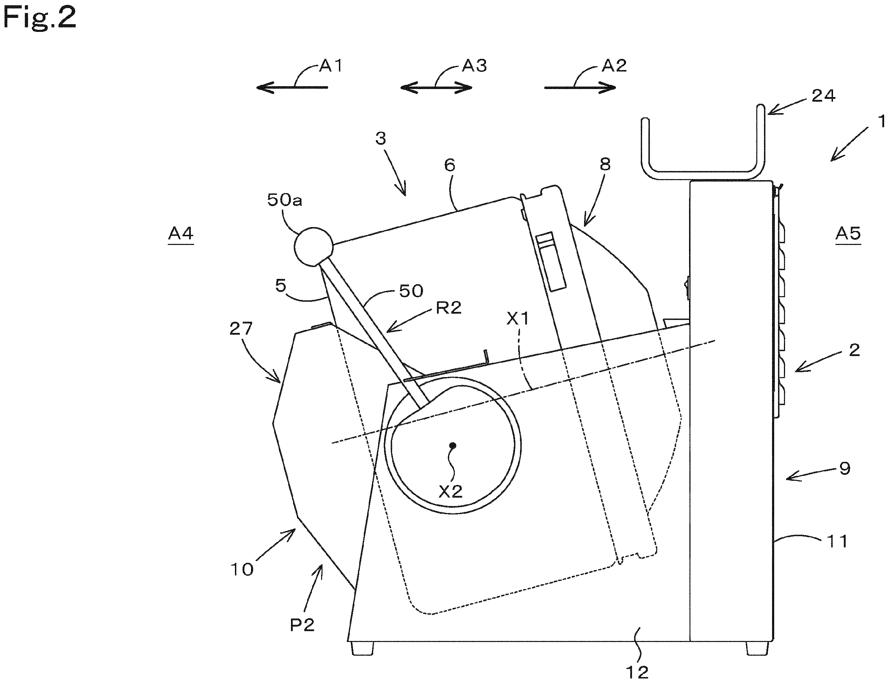

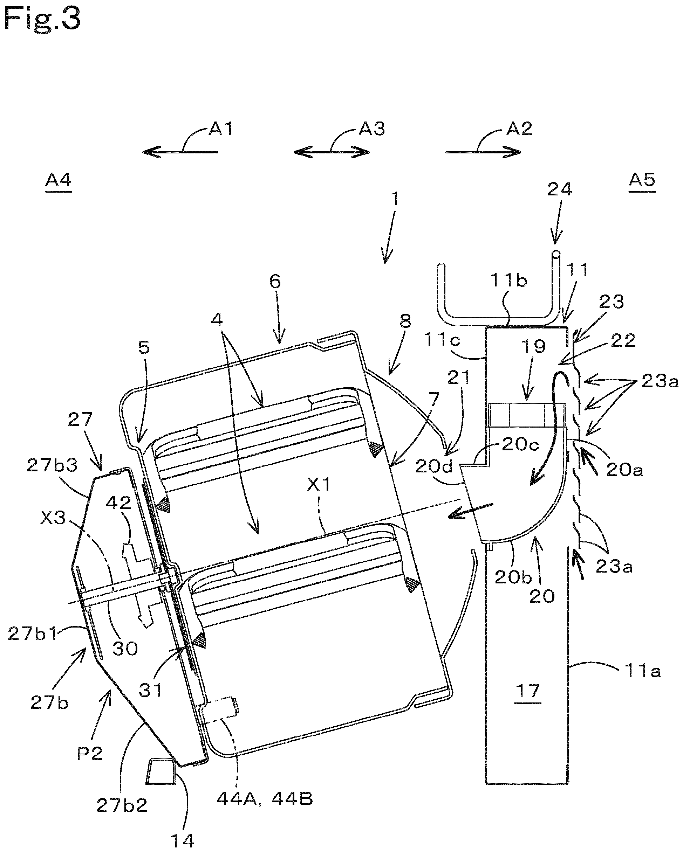

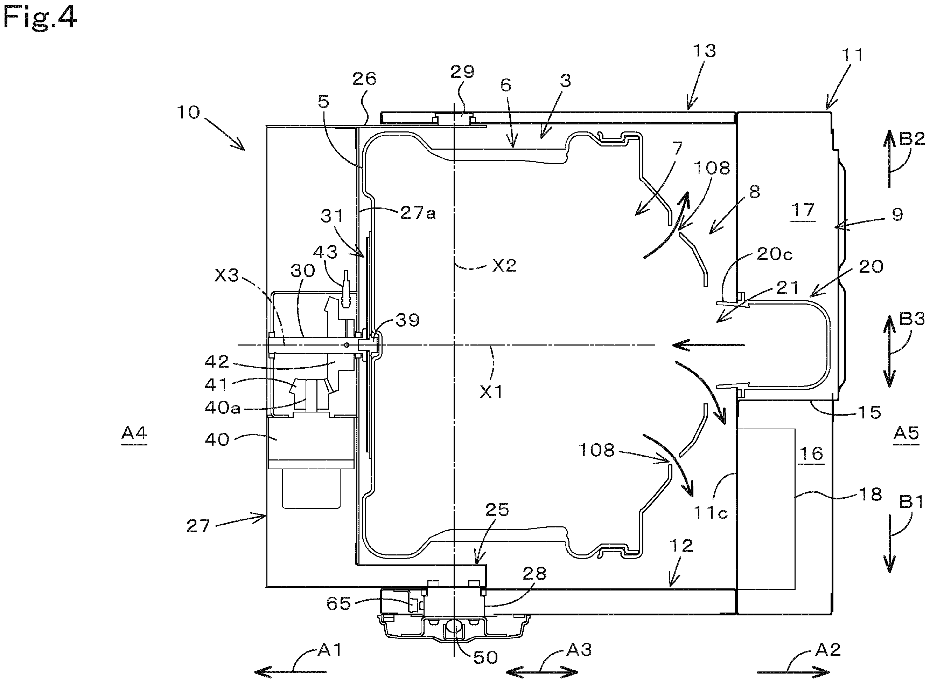

FIG. 1 is a schematic perspective view showing an overall configuration of an ingredient mixer 1. FIG. 2 is a schematic side view of the ingredient mixer 1. FIG. 3 is a schematic side cross-sectional view of the ingredient mixer 1. FIG. 4 is a schematic plan cross-sectional view of the ingredient mixer 1.

The ingredient mixer 1 is a machine configured to mix a plurality of ingredients. The ingredient mixer 1 is used, for example, in a vinegar-mixing machine that automatically mixes vinegar (that is, blended vinegar) with rice to make vinegared rice. The ingredient mixer 1 according to the present embodiment is a small vinegar-mixing machine, and is illustrated as a tabletop vinegar-mixing machine that is used on a table or other mounting stands.

The ingredient mixer 1 may be employed to mix a plurality of other ingredients, for example, mixing rice with other foods to make mixed rice. The ingredient mixer 1 is not limited to a tabletop vinegar-mixing machine.

In the present embodiment, as shown in FIGS. 2 to 4, a direction of arrowed line A1 is referred to as the front, a direction of arrowed line A2 is referred to as the rear, and a direction of arrowed line A3 is referred to as a fore-and-aft direction. Accordingly, in FIGS. 2 to 4, a direction indicated by a sign A4 corresponds to a front surface direction of the ingredient mixer 1, and a direction indicated by a sign A5 is a rear surface direction of the ingredient mixer 1.

A direction of arrowed line B 1 in FIG. 4 (that is, front surface sides of FIGS. 2 and 3) is referred to as the right, a direction of arrowed line B2 in FIG. 3 (that is, back surface sides in FIGS. 2 and 3) is referred to as the left, and a direction of arrowed line B3 in FIG. 3 (that is, a horizontal direction perpendicular to the fore-and-aft direction) is referred to as a machine width direction.

Directions from the center of the ingredient mixer 1 to the left and to the right in the machine width direction B3 are referred to as a machine outward direction. In other words, the machine outward direction is a direction separating away from the center of the ingredient mixer 1 in the machine width direction B3, that is, the machine width direction B3.

A direction opposite to the machine outward direction is described as a machine inward direction. In other words, the machine inward direction is a direction approaching the center of the ingredient mixer 1 in the machine width direction B3, that is, the machine width direction B3.

An outline of the ingredient mixer 1 will be described below.

As shown in FIGS. 1 to 3, the ingredient mixer 1 has a machine body 2, a mixing drum 3 that is rotatably supported by the machine body 2 around an axis XI (referred to as a drum axis) and rotates to mix a plurality of ingredients housed therein, and an agitating member 4 that is attached inside the mixing drum 3 and agitates the ingredients.

The mixing drum 3 has a drum body 6 that has one end surface opening toward a direction of the axis (a direction of the drum axis XI) and the other end surface closed by a bottom portion 5, and a drum lid 8 configured to close an opening 7 of the drum body 6. The bottom portion 5 of the drum body 6 is a bottom of the mixing drum 3.

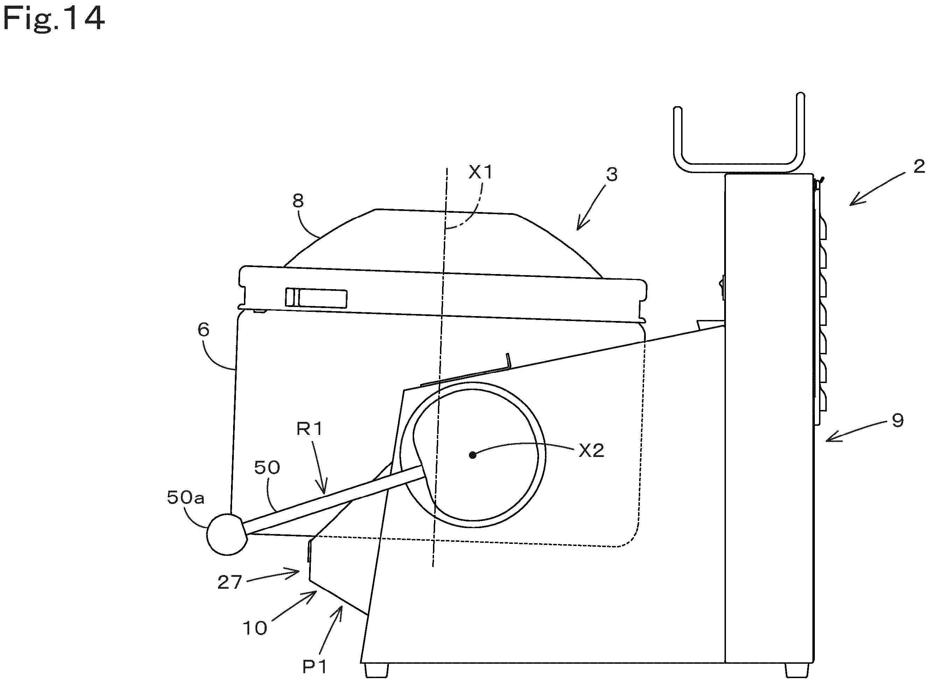

The mixing drum 3 is attached to the machine body 2 in substantially-upright posture with a portion near the bottom portion attached (see FIG. 14). The substantially-upright posture means a state where the drum axis XI extends in a substantially vertical direction, with the drum lid 8 being the upside and the bottom portion 5 of the drum body 6 being the downside. In this substantially-upright posture, ingredients are fed into the drum body 6. For example, ingredients are fed into the drum body 6 after the mixing drum 3 is attached to the machine body 2. The ingredients may be fed into the drum body 6 before the mixing drum 3 is attached to the machine body 2. The agitating member 4 is attached to the drum body 6, for example, after ingredients are fed into the drum body 6. The agitating member 4 may be attached to the drum body 6 before ingredients are fed into the drum body 6.

When attached to the machine body 2, the mixing drum 3 is postured to an inclining posture (see FIGS. 2 and 3) in which the drum axis XI inclines backward and extends upward. The mixing drum 3 is driven to rotate in this inclining posture, and accordingly the plurality of ingredients housed inside are mixed.

Components of the ingredient mixer 1 will be described in detail below.

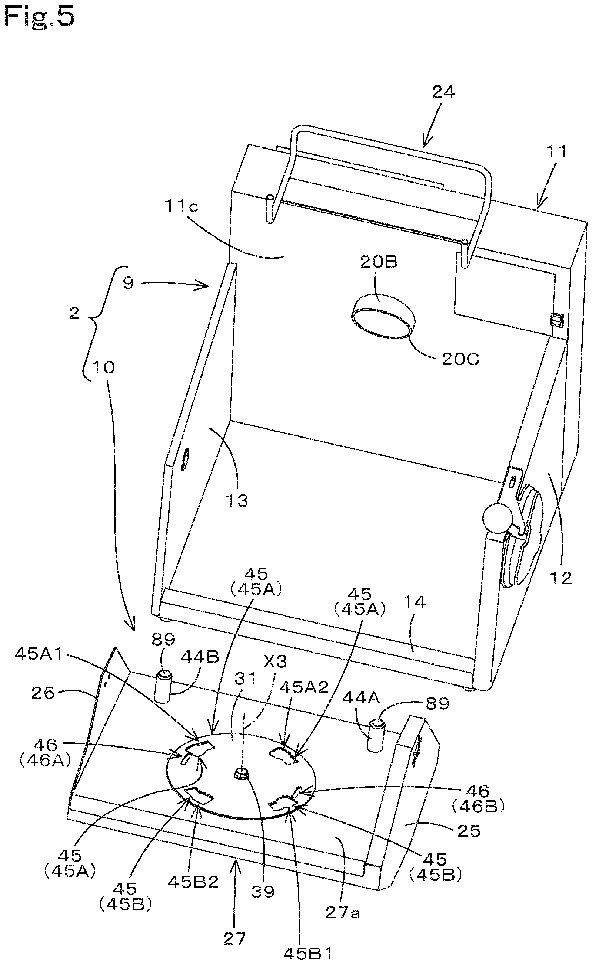

As shown in FIGS. 1 and 5, the machine body 2 has a main frame 9 that is placed on a table or the like, and a support frame 10 to which the mixing drum 3 is attached and swingably supported.

The main frame 9 has a frame body 11, a first side frame 12 extending from one side (that is, a front right portion) of the frame body 11 to the front (that is, a front direction), a second side frame 13 extending from the other side (that is, a front left potion) of the frame body 11 to the front, and a connecting frame 14 connected to the front portions of the first side frame 12 and the second side frame 13 to each other.

As shown in FIGS. 3 and 4, the frame body 11 is formed in a hollow shape with the front and rear surfaces, the top and bottom surfaces, and the left and right surfaces surrounded by walls. As shown in FIG. 4, a partition plate 15 is provided inside the frame body 11 in the middle of the machine width direction B3. This partition plate 15 partitions the interior of the frame body 11 into a first compartment 16 located right and a second compartment 17 located left. The first compartment 16 houses a controller 18 that controls operations of the ingredient mixer 1. As shown in FIG. 3, the second compartment 17 houses a blower 19 and an air-guide duct 20. The blower 19 is a device configured to generate a cooling air to be fed into the mixing drum 3 for the purpose of cooling the ingredients. The air-guide duct 20 is a member configured to guide the cooling air generated by the blower 19 into the mixing drum 3.

As shown in FIG. 3, the air-guide duct 20 is located at an upper portion of the second compartment 17. An upper portion 20a of the air-guide duct 20 is formed in a cylindrical shape having a longitudinal axis (that is, an axis extending in the vertical direction). A blower 19 is attached to the upper portion 20a of the air-guide duct 20. The blower 19 generates cooling air that flows downward. A lower portion 20b of the air-guide duct 20 is bent forward from a lower end of the upper portion 20a and projects forward from a front wall 11c of the frame body 11. A front portion of the lower portion 20b of the air-guide duct 20 serves as a cooling-air feeding port 20c configured to blow a cooling air generated by the blower 19 toward the mixing drum 3. This cooling-air feeding port 20c is located near the cooling-air inlet 21 formed in the drum lid 8. The cooling air blown from the cooling-air feeding port 20c is introduced into the mixing drum 3 through the cooling-air inlet 21 formed in the drum lid 8, and ingredients are cooled by the cooling air. An end portion 20d on the blowing side of the cooling-air feeding port 20c inclines backward and extends downward, and is parallel to the cooling-air inlet 21. The cooling-air feeding port 20c is located slightly lower than the center of the cooling-air inlet 21 and is directed to the center of the mixing drum 3.

As shown in FIG. 3, an opening 22 is formed in a rear wall 11a, which constitutes a back surface of the second compartment 17, and the opening 22 is covered by a back plate 23. The back plate 23 has a louvered ventilating portion 23a and allows ventilation. By driving the blower 19, the air is taken into the second compartment 17 through the ventilating portion 23a.

As shown in FIG. 1, a retaining member 24 is located on an upper wall 11b of the frame body 11 to retain the drum lid 8 together with the agitating member 4. The retaining member 24 is formed by bending a rod material, and has first and second rod portions 24a and 24b spaced side by side in the machine width direction B3. The retaining member 24 has a third rod portion 24c extending upwardly from a front end of the first rod portion 24a and a fourth rod portion 24d extending upwardly from a front end of the second rod portion 24b. Furthermore, the retaining member 24 has a fifth rod portion 24e extending upwardly from a rear end of the first rod portion 24a, a sixth rod portion 24f extending upwardly from a rear end of the second rod portion 24b, and a seventh rod portion 24g connected to upper portions of the fifth rod portion 24e and the sixth rod portion 24f.

As shown in FIG. 4, the first side frame 12 and the second side frame 13 are formed in hollow shapes and face each other in the machine width direction B3. As shown in FIG. 5, the connecting frame 14 is connected to front and lower portions of the first side frame 12 and the second side frame 13.

As shown in FIGS. 1 and 4, the support frame 10 is located between the first and second side frames 12 and 13. As shown in FIGS. 4 and 5, the support frame 10 has a first swing frame 25 located right, a second swing frame 26 located left, and a support stand 27 connected to the first swing frame 25 and the second swing frame 26.

As shown in FIG. 5, the first swing frame 25 projects from a right potion of an upper wall 27a of the support stand 27 in an orthogonal direction, and the second swing frame 26 projects from a left portion of the upper wall 27a of the support stand 27 in the orthogonal direction. As shown in FIG. 4, the first swing frame 25, in the projecting portion, is supported on the first side frame 12 via a rotating member 28 swingably around a swing axis X2 extending in the machine width direction B3. The first swing frame 25 is formed in a hollow shape. The second swing frame 26, in the projecting portion, is supported on the second side frame 13 via the support member 29 swingably around the swing axis X2.

As shown in FIG. 4, the support stand 27 is formed in a hollow shape and is connected to the second swinging frame 26. The mixing drum 3 is attached to the support stand 27. In detail, a rotating disc 31 is attached to the support stand 27 via a rotation shaft 30, and the mixing drum 3 is attached to the rotating disc 31. The rotation shaft 30 is supported on the support stand 27 rotatably around its axis. The axis X3 of the rotation shaft 30 is a rotation axis serving as a rotation centers of the rotating disc 31 and the mixing drum 3. That is, the axis X3 of the rotation shaft 30 matches (is concentric to) the drum axis XI in the state of being attached to the rotating disc 31. In the following description, the axis X3 of the rotation shaft 30 is also referred to as the rotation axis X3.

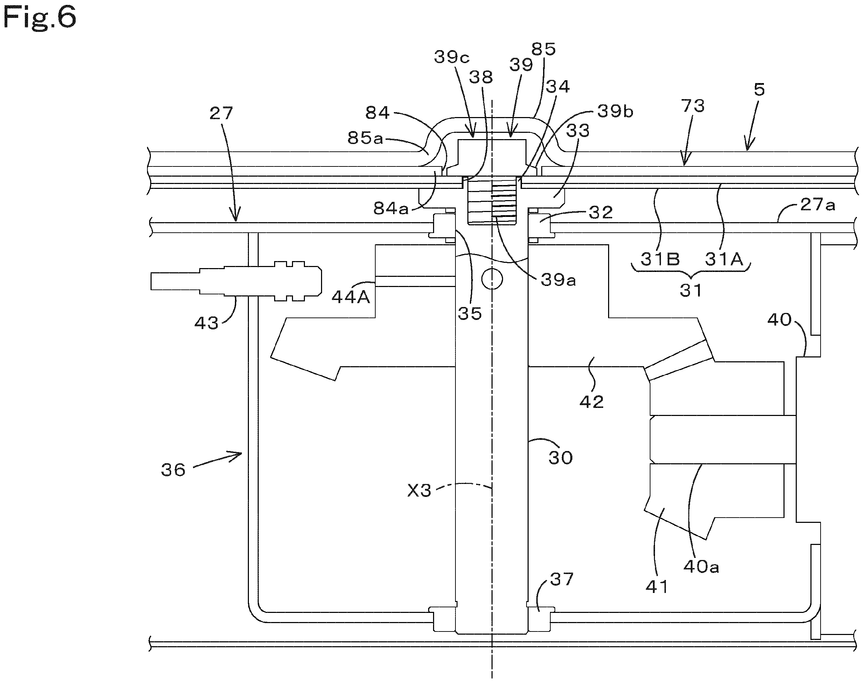

As shown in FIG. 6, one end of the rotation shaft 30 is supported on the upper wall 27a via a bearing member 32 rotatably around the axis. In addition, the one end of the rotation shaft 30 projects from the upper wall 27a. A receiving portion 33 projecting outward in the radial direction of the rotation shaft 30 is formed on the portion projecting from the upper wall 27a in the rotation shaft 30. One end side of the rotation shaft 30 has an engagement portion 34 projecting from the receiving portion 33. The engagement portion 34 is formed in a square pole shape having the rotation axis X3 as its axis. Furthermore, the rotation shaft 30 has, on one end, a threaded hole 35 formed to recess from the end of the engagement portion 34. A threaded hole is a hole with a female thread cut on an inner surface of a cylindrical hole. The other end of the rotation shaft 30 is supported, rotatably around the axis XI, on a bracket member 36 located inside the support stand 27 via a bearing member 37. The bracket member 36 is fixed to an inner surface of the upper wall 27a.

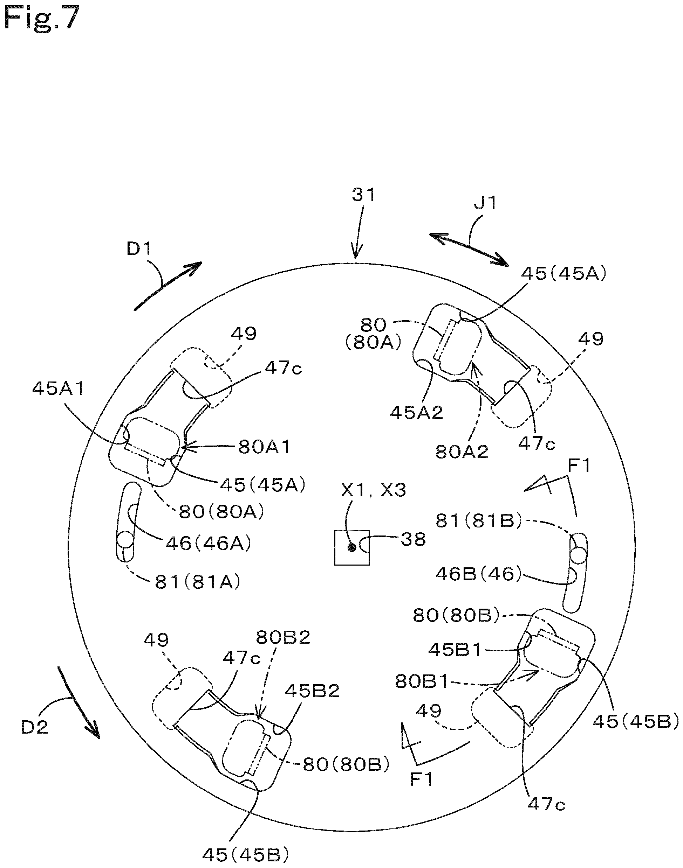

As shown in FIG. 7, a rectangular engagement hole 38 is formed through the tur disc 31, is located at the center of the rotating disc 31. As shown in FIG. 6, by engaging the engagement hole 38 to the engagement portion 34 of the rotation shaft 30, the rotating disc 31 becomes capable of rotating integrally with the rotation shaft 30. When the engagement hole 38 is engaged to the engagement portion 34, a lower surface of the rotating disc 31 contacts to the receiving portion 33.

As shown in FIG. 6, the rotating disc 31 is attached to the rotation shaft 30 by a fixture 39. In detail, the fixture 39 is constituted of a bolt, and has a threaded shaft portion 39a with male threads on the outer circumference, and a head portion 39c located on one end of the threaded shaft portion 39a. The head portion 39c has a flange portion 39b. By screwing the threaded shaft portion 30a into the threaded hole 35, a center portion of the rotating disc 31 is sandwiched between the flange portion 39b and the receiving portion 33, thereby attaching the rotating disc 31 to the rotation shaft 30.

As shown in FIG. 6, a drive motor 40 for driving the rotation shaft 30 is located inside the support stand 27. The drive motor 40 is attached and fixed to a bracket member 36. Power of the drive motor 40 rotates the rotation shaft 30 and rotates the rotating disc 31. In detail, a first gear (that is, a bevel gear) 41 is attached to an output shaft 40a of the drive motor 40 so as to be integrally rotatable, and a second gear (that is, a bevel gear) 42, which engages with the first gear 41, is attached to the rotation shaft 30 so as to be integrally rotatable. Power of the drive motor 40 is transmitted to the rotation shaft 30 through the first gear 41 and the second gear 42. The drive motor 40 is connected to the controller 18 by a harness, and the controller 18 controls the drive motor 40. In other words, the controller 18 controls a rotating operation of the rotating disc 31.

As shown in FIG. 6, a home position detector 43 is located inside the support stand 27 to detect a home position of the rotating disc 31, which is a position at which the mixing drum 3 is attached and from which the mixing drum 3 starts rotating. The home position detector 43 detects the home position of the rotating disc 31 by detecting the detector 44A provided on the second gear 42. The home position detector 43 is connected to the controller 18 by a harness, and the controller 18 stops the rotating disc 31 at the home position after a predetermined rotating time (that is, an operation time) of the mixing drum 3 has elapsed.

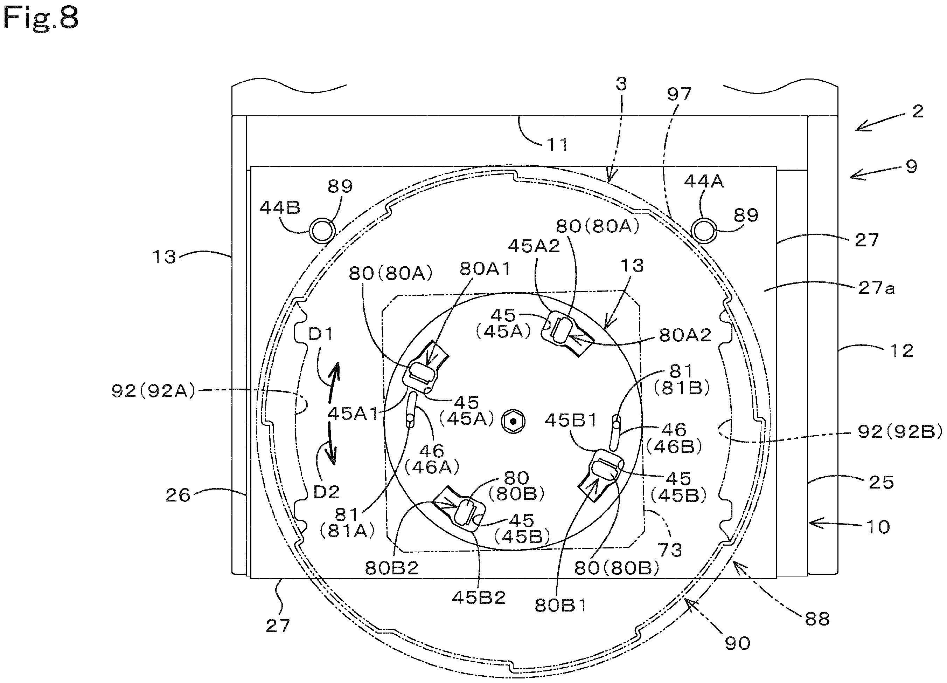

As shown in FIGS. 5 and 8, a plurality of rollers (that is, a first roller 44A and a second roller 44B) are provided on an upper surface of the upper wall 27a of the support stand 27. The first roller 44A is located behind and to the right of the rotating disc 31, and the second roller 44B is located behind and to the left of the rotating disc 31. The first and second rollers 44A and 44B are engaged with support shafts 89 having an axis parallel to the rotation axis X3 so as to be rotatable around its axis.

As shown in FIG. 8, when a circumferential surface of the mixing drum 3 (that is, a circumferential surface of a lower portion of the drum body 6) is in contact with the first and second rollers 44A and 44B, and the bottom portion 5 of the mixing drum 3 is placed on the rotating disc 31, the drum axis XI coincides with the rotation axis X3. That is, the first and second rollers 44A and 44B position the mixing drum 3 relative to the rotating disc 31 in an operation to attach the mixing drum 3 to the rotating disc 31. The mixing drum 3 is attached to the rotating disc 31 by being rotated at a predetermined angle around the rotational axis X3 in a setting direction indicated by an arrowed line D1 in FIG. 8. At this time, the first and second rollers 44A and 44B rotate in accordance with the rotation of the mixing drum 3, and accordingly the mixing drum 3 can be rotated smoothly. The first and second rollers 44A and 44B are located to be lower than of a lower portion of the mixing drum 3 when the mixing drum 3 is driven to rotate in a lifted posture inclining backward, and support the rotation of the mixing drum 3 well. The rotating disc 31 rotates the mixing drum 3 by rotating in a rotating direction indicated by an arrowed line D2 in FIG. 8. That is, the setting direction D1 and the rotating direction D2 are opposite to each other.

As shown in FIG. 7, the rotating disc 31 has insertion holes 45. The insertion holes 45 include a first insertion hole 45A and a second insertion hole 45B which are located at radially symmetrical positions in the rotating disc 31. In the present embodiment, two pairs of the first insertion hole 45A and second insertion hole 45B are provided. The first pair of first insertion hole 45A1 and second insertion hole 45B1 and the second pair of first insertion hole 45A2 and second insertion hole 45B2 are formed with a phase difference of 90° in a circumferential direction J1 (referred to as a disc circumferential direction) of the rotating disc 31. The insertion holes 45 may be constituted of a one pair of the first insertion hole 45A and second insertion holes45B, or three or more pairs of the first insertion hole 45A and second insertion holes 45B. There may be a single insertion hole 45.

The rotating disc 31 has engagement grooves 46 formed and spaced behind the insertion holes 45 in the setting direction D1. The engagement grooves 46 include a first engagement groove 46A located behind the first insertion hole 45A1 in the setting direction D1 and a second engagement groove 46B located behind the second insertion hole 45B1 in the setting direction D1. The engagement grooves 46 is formed in a circular arc shape around the center of the rotating disc 31 (that is, the rotation axis X3). In this embodiment, the engagement grooves 46 are located only behind a first pair of the first and second insertion holes 45A1 and 45B1, but may also be located behind a second pair of the first and second insertion holes 45A2 and 45B2. In other words, the same number of engagement grooves 46 as insertion holes 45 may be provided.

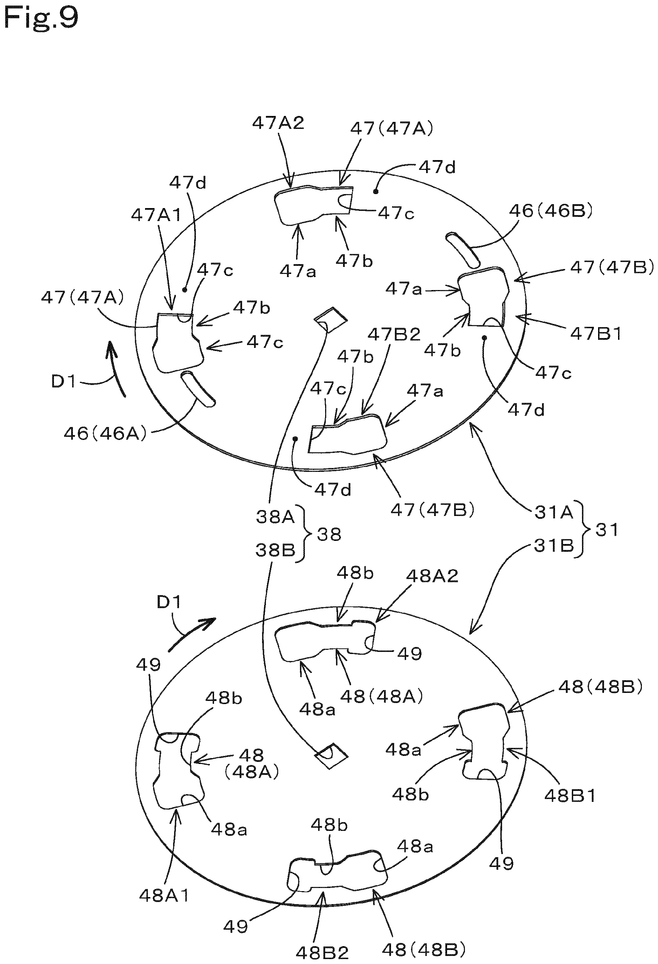

As shown in FIG. 9, the rotating disc 31 is formed of two discs, an upper plate 31A and a lower plate 31B. The lower plate 31B is concentrically stacked on and fixed to the lower surface of the upper plate 31A.

The engagement holes 38 are formed of a first engagement hole 3 8A formed through the center of the upper plate 31A and a second engagement hole 38B formed through the center of the lower plate 31B.

The insertion holes 45 are formed of upper through holes 47 formed in the upper plate 31A and lower through holes 48 formed in the lower plate 31B.

The upper through holes 47 are formed through the upper plate 31A. The upper through holes 47 include a first upper through hole 47A and a second upper through hole 47B formed at radially symmetrical positions in the rotating disc 31. Two pairs of the first upper through hole 47A and the second upper through hole 47B are provided. A first pair of the first upper through hole 47A1 and the second upper through hole 47B1 and a second pair of the first upper through hole 47A2 and the second upper through hole 47B2 are formed with a phase difference of 90° in a disc circumferential direction J1.

The lower through holes 48 are formed through the lower plate 31B. The lower through holes 48 include a first lower through hole 48A and a second lower through hole 48B formed at radially symmetrical positions in the rotational plate 31. Two pairs of the first lower through hole 48A and the second lower through hole 48B are provided. A first pair of the first lower through hole 48A1 and the second lower through hole 48B1 and a second pair of the first lower through hole 48A2 and the second lower through hole 48B2 are formed with a phase difference of 90° in the disc circumferential direction J1.

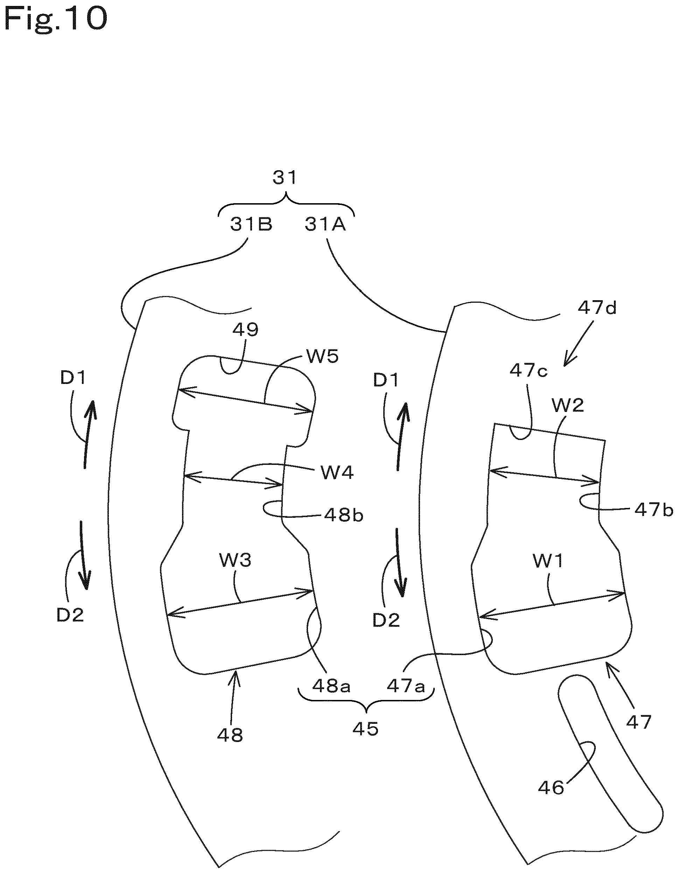

As shown in FIG. 10, the upper through holes 47 have first portions 47a and second portions 47b extending from the first portions 47a in the setting direction D1. Widths W1 of the first portions 47a are larger than widths W2 of the second portions 47b. A portion between the first portion 47a and the second portion 47b (a portion connecting the first portion 47a and the second portion 47b) is formed in a tapered shape that is gradually narrowed in the setting direction D1.

The lower through holes 48 have first portions 48a and second portions 48b extending from the first portions 48a in the setting direction D1. Widths W3 of the first portions 48a are larger than widths W4 of the second portions 48b. A portion between the first portion 48a and the second portion 48b (a portion connecting the first portion 48a and the second portion 48b) is formed in a tapered shape that is gradually narrowed in the setting direction D1.

The width W1 of the first portion 47a of the upper through hole 47 is formed to be approximately the same width as the width W3 of the first portion 48a of the lower through hole 48. The width W2 of the second portion 47b of the upper through hole 47 is formed larger than the width W4 of the second portion 48b of the lower through hole 48.

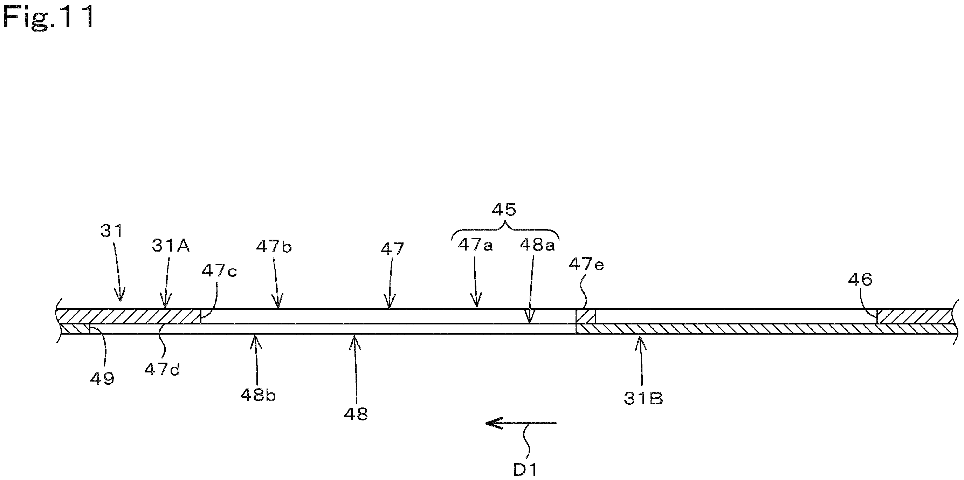

As shown in FIG. 11, the first portions 47a of the upper through holes 47 and the first portions 48a of the lower through holes 48 are connected to each other. These first portions 47a and 48a form the insertion holes 45. In addition, the second portions 47b of the upper through holes 47 and the second portions 48b of the lower through holes 48 are connected to each other.

As shown in FIGS. 10 and 11, the engagement grooves 46 are formed through the upper plate 31A. Front ends of the upper through holes 47 in the setting direction D1 are rotation transmitting portions 47c that transmit a rotation force of the rotating disc 31 to the mixing drum 3. Front portions of the rotation transmitting portions 47c in the upper plate 31A in the setting direction D1 is restriction walls 47d that restricts the mixing drum 3 from being disengaged from the rotating disc 31.

As shown in FIG. 10, the lower plate 31B has locking grooves 49 that restricts the mixing drum 3 from rotating in an opposite direction to the setting direction D1 with respect to the rotating disc 31. The locking grooves 49 are formed through the lower plate 31B. The locking grooves 49 are located in front of the lower through holes 48 in the setting direction D1 and on lower sides of the restriction walls 47d, and are connected to the lower through holes 48. Widths W5 of the locking grooves 49 are larger than widths W4 of the second portions 48b of the lower through holes 48.

By forming the rotating disc 31 of two discs, the upper plate 31A and the lower plate 31B, the engagement grooves 46 and the locking grooves 49 can be easily formed.

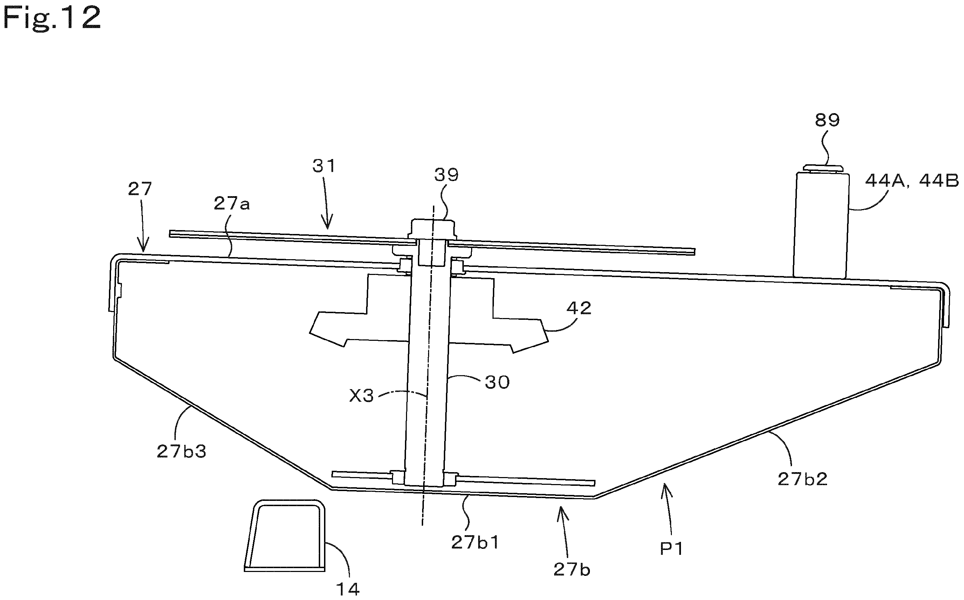

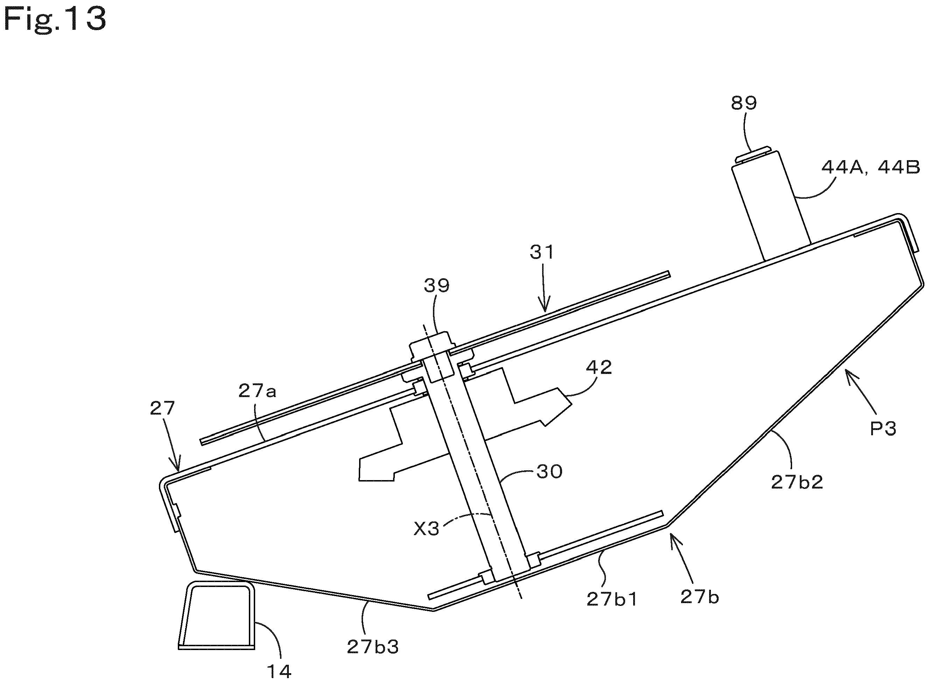

The support frame 10 and the rotating disc 31 can be repositioned between an attachment position P1 shown in FIG. 12, an operating position P2 shown in FIG. 3, and a take-out position P3 shown in FIG. 13 by swinging the support frame 10 around the swing axis X2.

The attachment position P1 is a position where the mixing drum 3 is attached to the support frame 10 (that is, the rotating disc 31) in a substantially-upright posture, as shown in FIG. 14.

As shown in FIG. 12, in the attachment position P1, the upper wall 27a of the support stand 27 and the rotating disc 31 are inclined downward and extended backward, and are slightly inclined backwardly downward with respect to the horizontal direction (that is, a horizontal plane). In other words, at the attachment position P1, the rotating disc 31 is inclined downward toward the rollers 44A and 44B. In the present embodiment, at the attachment position P1 of the support frame 10 and the like, the drum axis XI is tilted backward at an angle of about 2° to the vertical direction (that is, a vertical line), for example.

As shown in FIGS. 2 and 3, the operating position P2 is a position where the support frame 10 is raised from the attachment position P1 (that is, swung upwardly around the swing axis X2), and where the mixing drum 3 is rotated in an inclined posture extending backwardly upward. That is a position where ingredients are mixed. In this state of the mixing drum 3, the cooling-air inlet 21 is positioned close to the cooling-air feeding port 20c. In the present embodiment, at the operating position P2 of the support frame 10 and the like, the drum axis XI is tilted backward at an angle of about 75° to the vertical direction, for example. That is, the mixing drum 3 is rotated in an upwardly inclining posture close to a lateral direction. The lateral direction corresponds to a state in which the drum axis XI extends substantially in the horizontal direction.

As shown in FIG. 3, the support frame 10 is restricted from swinging upward by contacting to the connecting frame 14 at the operating position P2. Specifically, in explanation of the state at the attachment position P1 shown in FIG. 12, the lower wall 27b of the support stand 27 has a first wall 27b1 located at the middle in the fore-and-aft direction and is abbreviatedly parallel to the upper wall 27a, a second wall 27b2 (referred to as a first contacting wall) inclining and extending forwardly upward from the first wall 27b1, and a third wall 27b3 (referred to as a second contacting wall) inclining and extending backwardly upward from the first wall 27b1. When the support frame 10 is swung from the attachment position P1 to the operating position P2, the rear portion of the second wall 27b2 contacts to the connecting frame 14, thereby restricting the support frame 10 from swinging upward, as shown in FIG. 3.

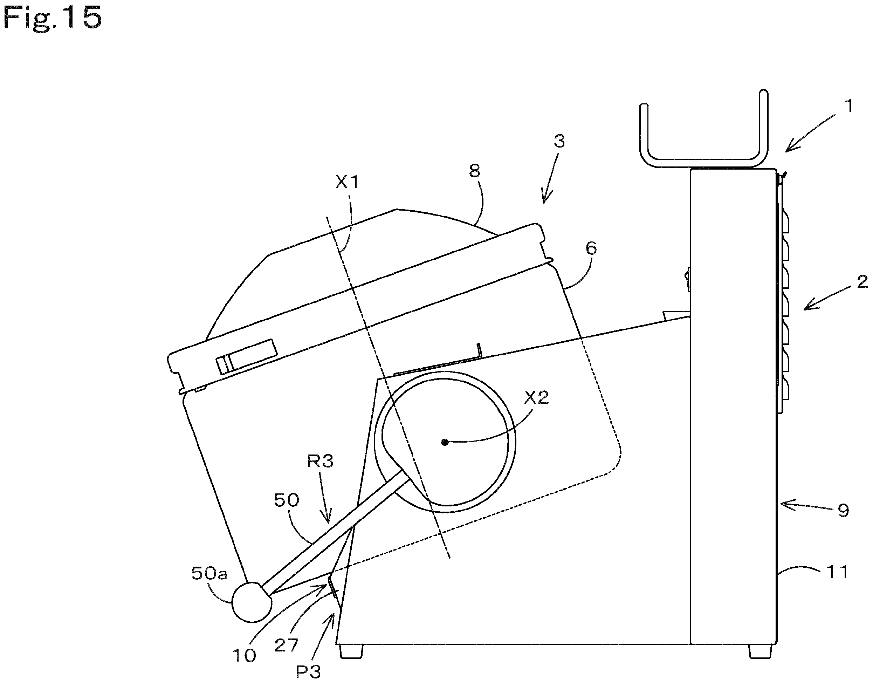

The take-out position P3 is a position where the support frame 10 is swung downward from the attachment position P1, as shown in FIG. 15, and where the mixing drum 3 is inclined upwardly forward and ingredients housed inside are taken out. When the support frame 10 is swung from the attachment position P1 to the operating position P2, a front portion of the third wall 27b3 contacts to the connecting frame 14 to restrict the support frame 10 from swinging downward, as shown in FIG. 13.

As shown in FIG. 15, in the present embodiment, in the take-out position P3 of the support frame 10 and the like, the drum axis XI is tilted forward at an angle of about 30° to the vertical direction, for example.

As shown in FIG. 1, the machine body 2 has an operation lever 50 that swings the support frame 10 between the attachment position P1, the operating position P2, and the take-out position P3. The operation lever 50 has a base 50b connected to the support frame 10 so as to be integrally rotatable around the swing axis X2, and has a spherical grip 50a at the tip end. The operation lever 50 can be swung between a first operation position R1 (see FIG. 14) that is a position where the support frame 10 is in the attachment position P1, a second operation position R2 (see FIG. 2) that is a position where the support frame 10 is in the operating position P2, and a third operation position R3 (see FIG. 15) that is a position where the support frame 10 is in the take-out position P3.

As shown in FIG. 14, the operating lever 50 has an inclining posture extending forwardly downward in the first operating position R1. In the present embodiment, the operation lever 50 is inclined forwardly downward, for example, at an angle of about 18° to the horizontal direction (that is, the horizontal line) in the first operation position R1.

As shown in FIG. 2, the operation lever 50 is inclined forwardly upward in the second operation position R2. The operating lever 50 is inclined forward, for example, at an angle of about 35° to the vertical direction in the second operating position R2.

As shown in FIG. 15, in the third operating position R3, the operating lever 50 is inclined forwardly downward and has an inclination angle greater than the first operating position R1 relative to the horizontal direction. In the third operation position R3, the operation lever 50 is inclined forwardly downward at an angle of about 40° to the horizontal direction, for example.

In operation of the operation lever 50 to move the support frame 10 and the like from the attachment position P1 to the operating position P2, for example, when the operation lever 50 is operated backward beyond the position where the operation lever 50 stands vertically, a force for operating the operation lever 50 acts on the machine body 2 in a direction of lifting a front portion of the machine body 2, and then the front portion of the machine body 2 may be lifted. In contrast, in the present embodiment, the operation lever 50 is not operated backward beyond the position where the operation lever 50 stands vertically in the operation of the support frame 10 and the like from the attachment position P1 to the operating position P2, the force to operate the operation lever 50 can be prevent from lifting the machine body 2.

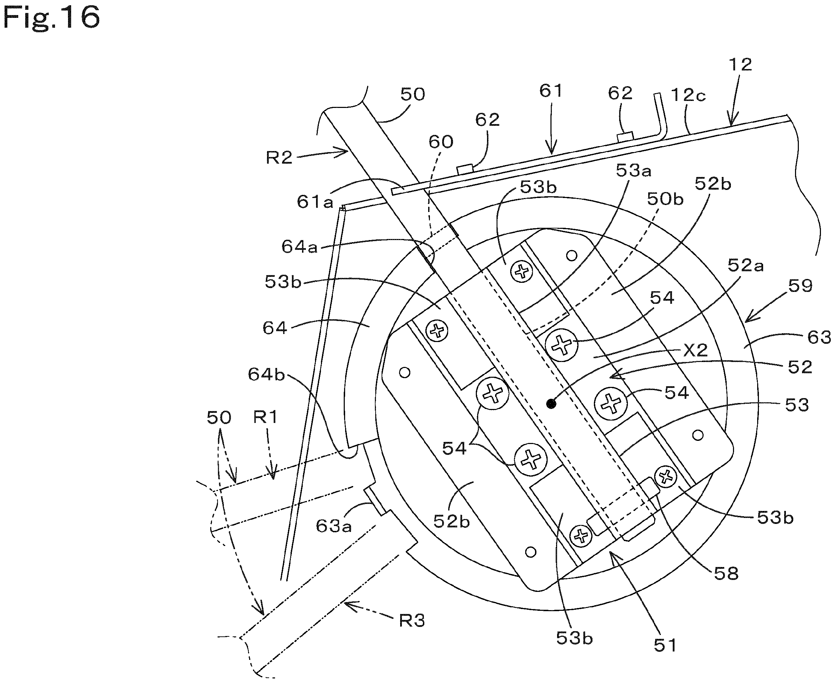

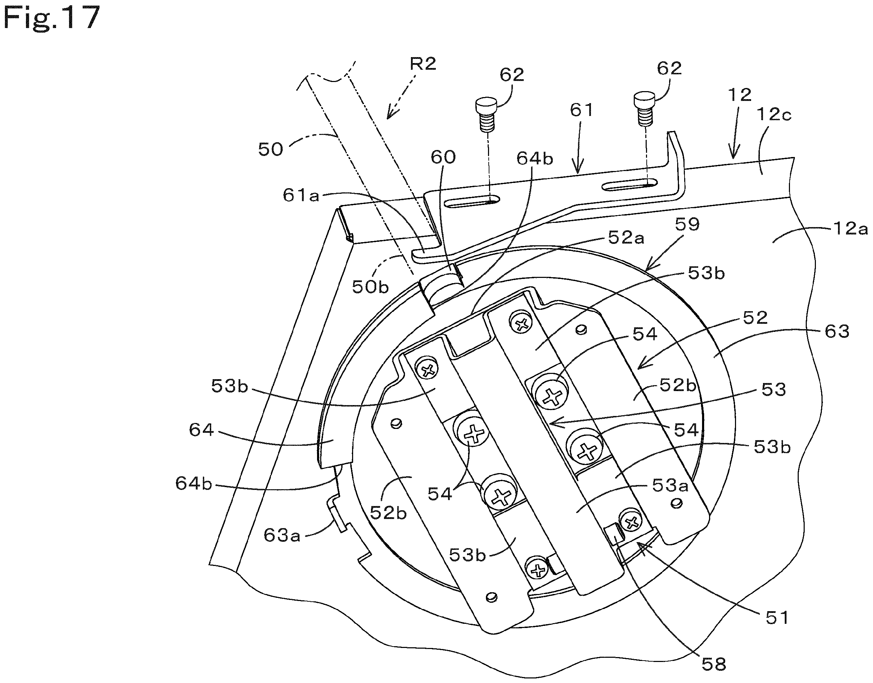

As shown in FIG. 16, the base 50b of the operation lever 50 is integrally and rotatably attached to an attachment 51 configured to rotate around the swing axis X2. The attachment 51 has a base member 52 and a retaining member 53, as shown in FIG. 17.

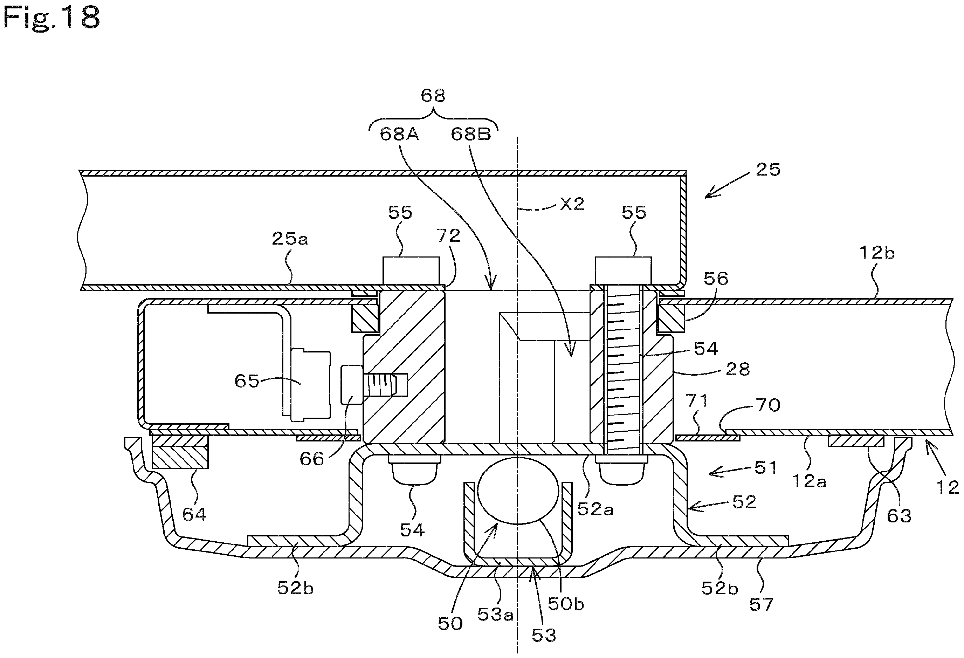

As shown in FIG. 18, the base member 52 is supported on the first side frame 12 via the rotating member 28 rotatably around the swing axis X2. In detail, the rotating member 28 is cylindrical with the swing axis X2 as the axis, and is located over an outside wall 12a and an inside wall 12b of the first side frame 12. On the other hand, the base member 52 has a base wall 52a which is in contact with an end surface of the rotating member 28 in the machine outward direction and is attached to the first swing frame 25 together with the rotating member 28 by a plurality of attachment bolts 54. The attachment bolts 54 are fastened to nut members 55 fixed to an inner surface of an outside wall 25a of the first swing frame 25 through the base wall 52a and the rotating member 28. The rotating member 28 is supported rotatably around the swing axis X2 by a ring-shaped support member 56 fixed to the inside wall 12b of the first side frame 12. In this manner, the support frame 10, the rotating member 28, the base member 52, and the operation lever 50 are supported by the first side frame 12 to be integrally rotatable around the swing axis X2.

As shown in FIG. 18, the base member 52 has a cover attachment wall 52b extending from the base wall 52a. A cover 57 covering the attachment 51 is attached to the cover attachment wall 52b by fasteners.

As shown in FIG. 17, the retaining member 53 has an insertion portion 53a and an attachment piece 53b extending from the insertion portion 53a. The base portion 50b of the operation lever 50 is inserted into the insertion portion 53a, and the attachment piece 53b is fixed to the base wall 52a by fasteners. In this manner, the operation lever 50 can be rotated around the swing axis X2 integrally with the attachment 51, the support frame 10, and the rotating member 28.

An end portion of the base portion 50b of the operation lever 50 is swingably supported by support pins 58 that penetrate the base portion 50b and the insertion portion 53a. The operation lever 50 is swingable in the machine width direction B3 around the axis of the support pin 58. In addition, the operation lever 50 is biased in the machine inward direction by a biasing spring (not shown in the drawings) housed in the insertion portion 53a.

As shown in FIGS. 16 and 17, an engagement body 59 is located around the base wall 52a to retain the operation lever 50 in any one of the first operation position R1, the second operation position R2, and the third operation position R3. The engagement body 59 has a base plate 63, a positioning member 60, and a restriction member 64. The base plate 63 is formed of a ring-shaped disc, surrounds the base wall 52a, and is fixed to an outer surface of the outside wall 12a of the first side frame 12. A restriction piece 63a is formed by being cut and raised on a front lower portion of the base plate 63. The positioning member 60 is located on a front upper portion of the base plate 63 and is fixed to the outside wall 12a. The restriction member 64 is formed in an arc shape and is located between the positioning member 60 and the restriction piece 63a and fixed to the base plate 63. One end 64a of the restriction member 64 is located in close proximity to the positioning member 60. The other end 64b of the restriction member 64 is positioned at a distance from the restriction piece 63a.

The operation lever 50 is engaged with the positioning member 60 in the second operation position R2 to be retained in the second operation position R2. In addition, the operation lever 50 is engaged with the positioning member 60 by a biasing force of a biasing spring, and is disengaged from the positioning member 60 by being swung around the support pin 58 in the machine outward direction. The operation lever 50 becomes operable around the swing axis X2 by being disengaged from the positioning member 60.

As shown in FIG. 17, a lock piece 61a is located on the upper surface 12c of the first side frame 12 to restrict the operation lever 50 from being disengaged from the positioning member 60. The lock piece 61a is attached to the upper surface 12c of the first side frame 12 by a plurality of fastening members 62 so that the lock piece 61a can slide up and down on the upper surface 12c. The lock piece 61a is provided with an engagement portion 61a configured to contact, in the machine outward direction, to the operation lever 50 located in the second operation position R2 and thus to restrict the operation lever 50 from being disengaged from the positioning member 60. By sliding the lock piece 61a upwardly, the engaging portion 61a is disengaged from the operation lever 50 to allow the operation lever 50 to swing in the machine width direction B3.

As shown in FIG. 16, the operation lever 50 is retained in the first operation position R1 by being sandwiched between the other end 64b of the restriction member 64 and the restriction piece 63a. The operation lever 50 is positioned between the other end 64b of the restriction member 64 and the restriction piece 63a by a biasing force of a biasing spring, and is removed from between the other end 64b of the restriction member 64 and the restriction piece 63a by being swung around the support pin 58 in the machine outward direction. The restriction member 64 restricts the swinging of the operation lever 50 in the machine inward direction during the movement of the operation lever 50 between the first operation position R1 and the second operation position R2. In addition, the operation lever 50 is positioned below the restriction piece 63a in the third operation position R3, and is restricted from swinging upward by the restriction piece 63a. The downward swing of the operation lever 50 in the third operation position R3 is restricted by the third wall 27b3 contacting to the connecting frame 14. The operation lever 50 can pass through the restriction piece 63a by swinging in the machine outward direction.

As shown in FIG. 18, a lever position detector 65 is provided inside a front portion of the first side frame 12 to detect that the operation lever 50 is in the second operation position R2. The lever position detector 65 detects that the operation lever 50 is in the second operation position R2 by detecting a detector 66 fixed on an outer circumference of the rotating member 28. The lever position detector 65 is connected to the controller 18 by a harness, and the controller 18 is capable of acquiring a detection signal of the lever position detector 65. The controller 18 drives the drive motor 40 to rotate the mixing drum 3 by acquiring the detection signal of the lever position detector 65 and operating a start switch. That is, in a case where the lever position detector 65 does not detect the second operation position R2 of the operation lever 50, the mixing drum 3 does not rotate even when the start switch is operated.

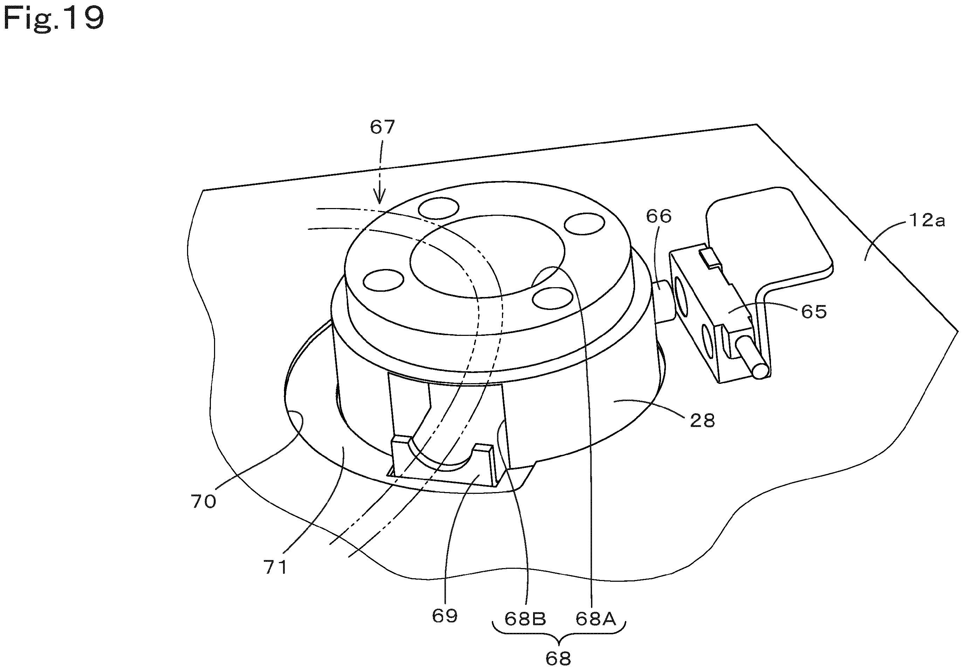

As shown in FIG. 19, the rotating member 28 has a harness through path 68 through which a harness 67 is arranged from the drive motor 40 to the controller 18. The harness through path 68 has a first through portion 68A formed at the center of the rotating member 28 in the swing axis X2, and a second through portion 68B formed from the first through portion 68A to the outer circumference of the rotating member 28. A harness support portion 69 to support the harness 67 is located near an opening portion of the second passage portion 68B opposed to the first passage portion 68A. The harness support portion 69 is formed by extending from the base wall 52a and rotates integrally with the rotating member 28.

As shown in FIGS. 18 and 19, a cut-out portion 70 is formed in the outside wall 12a of the first side frame 12 to allow rotation of the harness support portion 69, and a ring-shaped cover plate 71 is located on the rotating member 28 to cover the cut-out portion 70.

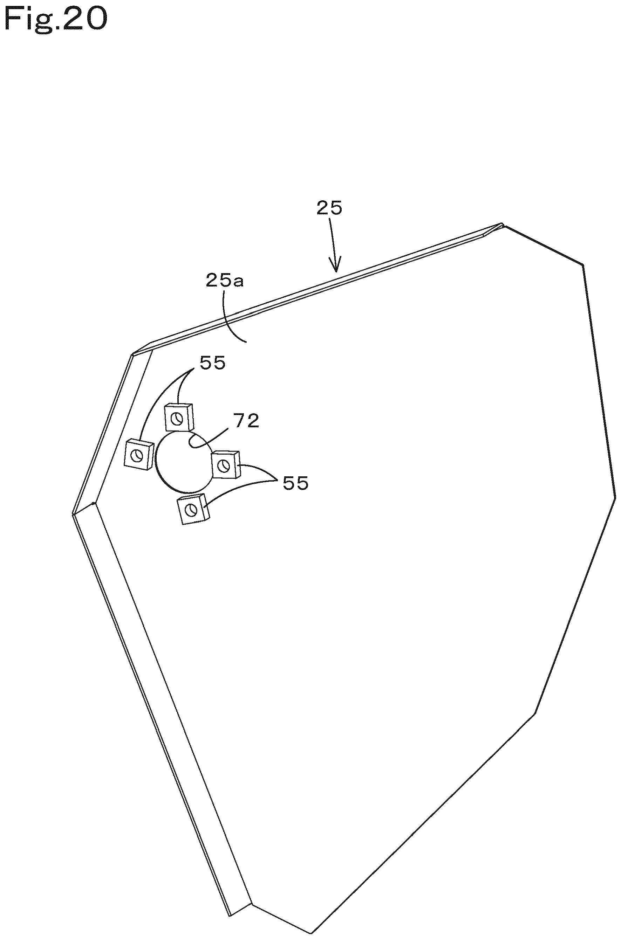

As shown in FIGS. 18 and 20, a connecting hole 72 is formed in the outside wall 25a of the first swing frame 25, and is connected to the first through portion 68A.

The harness 67 passes through the inside of the support stand 27 from the drive motor 40 and the home position detector 43 to the interior of the first swing frame 25, is inserted through the connecting hole 72 from the inside of the first swing frame 25 into the first through portion 68A and passes through the second passage 68B from the first through portion 68A to the inside of the first side frame 12, passes through the inside of the first side frame 12 to enter the first compartment 16 of the frame body 11, and then connected to the controller 18.

Since the harness 67 passes through the center portion of the rotating member 28 and is arranged extending in the swing axis X2, the harness 67 can be prevented from twisting even when the operation lever 50 is swung around the swing axis X2.

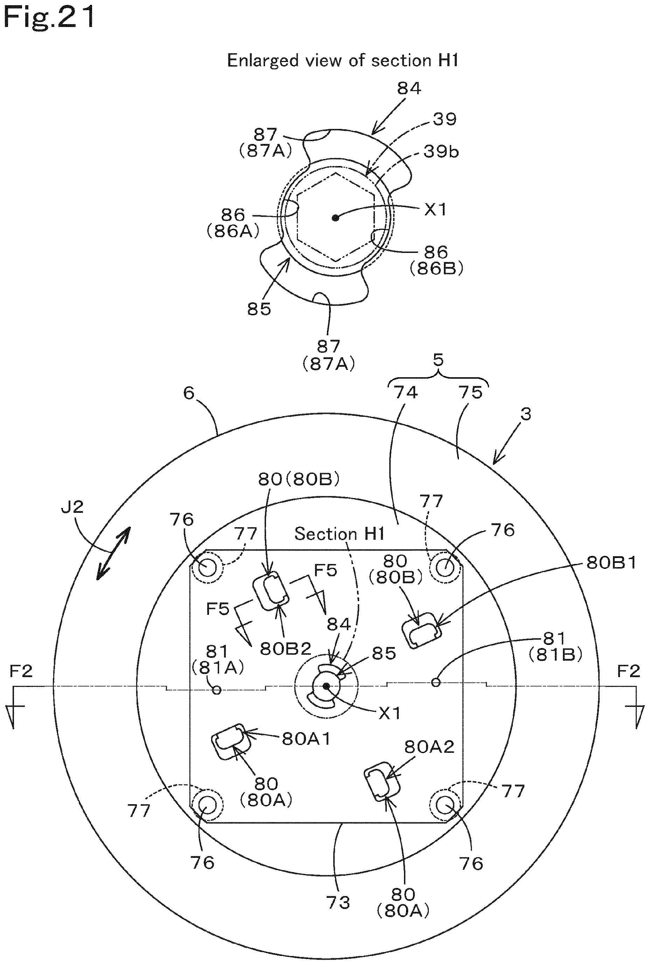

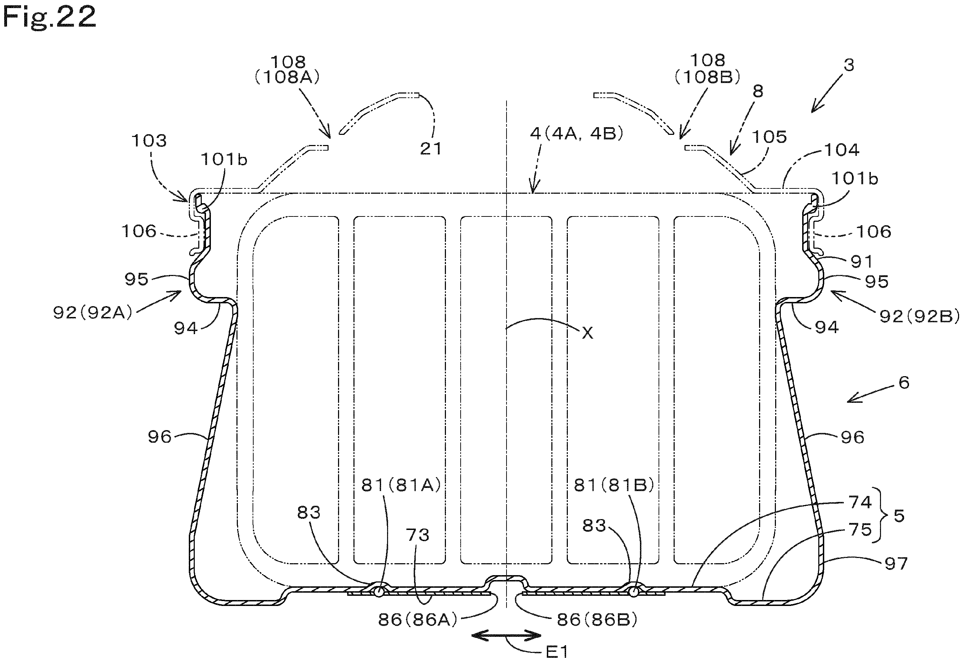

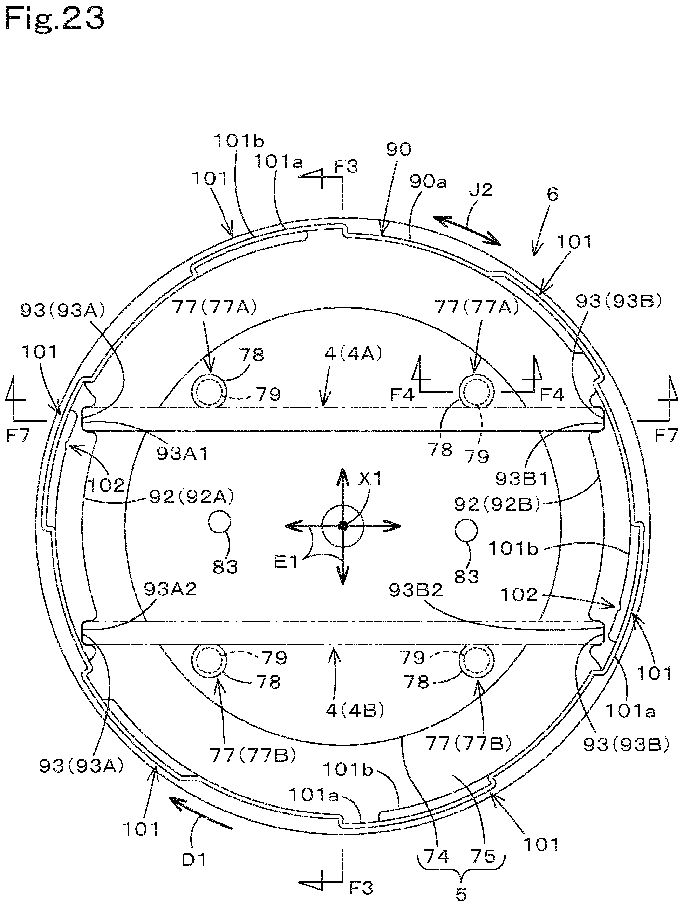

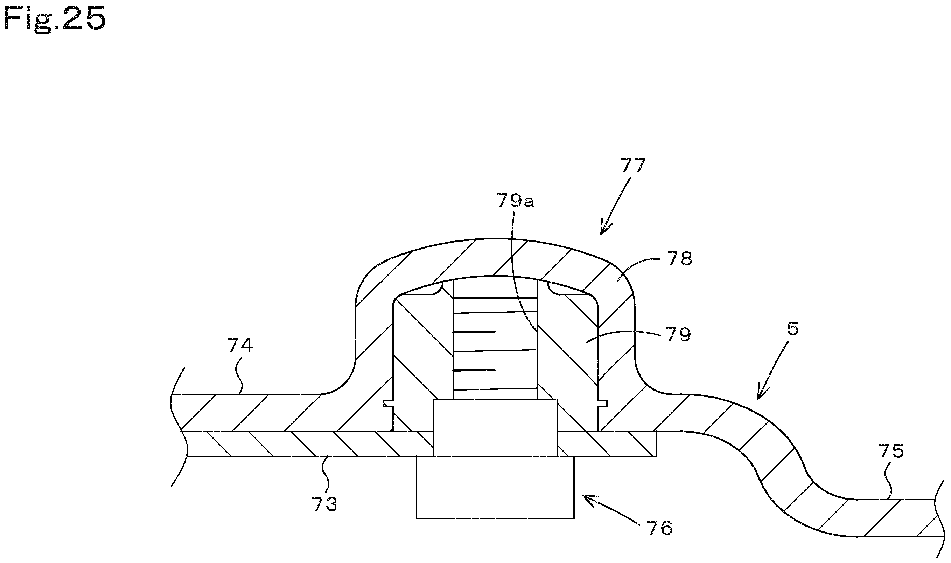

As shown in FIGS. 21 and 22, the mixing drum 3 has an attachment plate 73 attached to the bottom portion 5 of the drum body 6. The bottom portion 5 of the drum body 6 has a housing recess portion 74 that is circular in shape centered on the drum axis XI and recessed upward (that is, toward the opening 7), and a mounting portion 75 on an outer circumference of the housing recess portion 74. The attachment plate 73 is housed in the housing recess portion 74. The attachment plate 73 is formed by a rectangular plate material, and the four corners are attached, by the attachment tools 76, to protrusions 77 projecting upward from the bottom portion 5. As shown in FIG. 23, the protrusions 77 are located inside the mixing drum 3 in the housing recess portion 74. The protrusions 77 have protruding bodies 78 formed of resin integrally on the bottom portion 5 of the drum body 6 and nuts 79 embedded in the protruding bodies 78, as shown in FIG. 25. The protruding bodies 78 protrude upwardly (that is, toward the opening) from the bottom portion 5. The nuts 79 are integrated with the protruding bodies 78, for example, in an insert molding manner during a resin molding operation of the drum body 6. Lower surfaces of the nuts 79 are exposed to the lower surface of the bottom portion 5. The attachment plate 73 contacts to the lower surface of the bottom portion 5 and is attached by the attachment tools 76 that are threaded through the attachment plate 73 into the threaded holes 79a of the nuts 79.

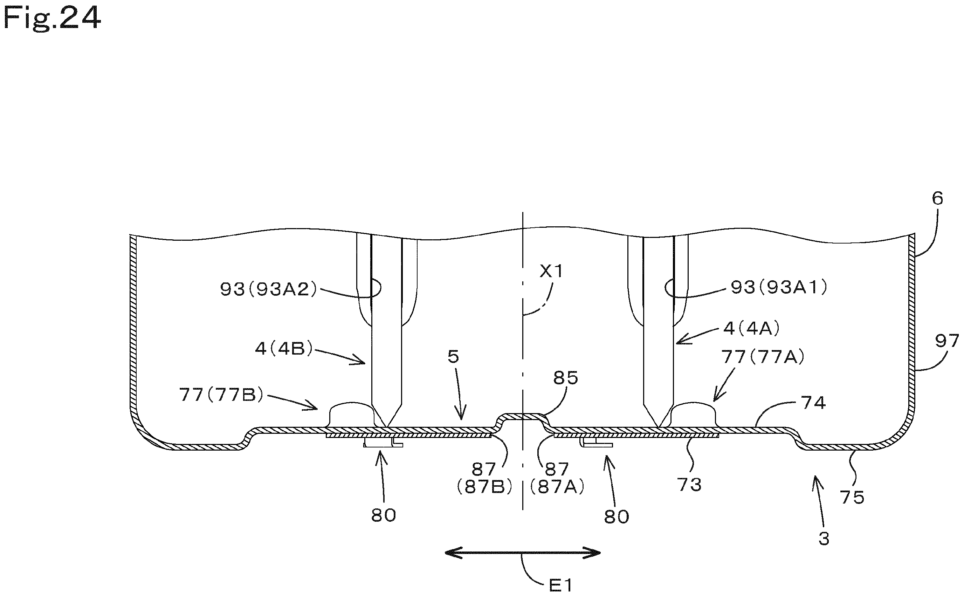

As shown in FIG. 24, the protrusions 77 contact to the lower end of the agitating member 4 and supports a lower portion of the agitating member 4.

As shown in FIGS. 22 and 23, the agitating member 4 traverses the drum body 6. In detail, the agitating member 4 transverses the drum body 6 in a lateral direction. The lateral direction is a direction extending in a direction orthogonal to the direction of axis XI of the mixing drum 3.

As shown in FIG. 22, the lower end of the agitating member 4 is in contact with the bottom portion 5 of the drum body 6. As shown in FIG. 23, the protrusions 77 are displaced relative to the agitating member 4 a direction intersecting the transverse direction, and contacts to the agitating member 4 in the direction.

As described above, the protrusions 77 serve as both attachment portions for attaching the attachment plate 73 and support members for supporting the agitating member 4.

As shown in FIG. 23, the protrusions 77 include a plurality of first protrusions 77A and a plurality of second protrusions 77B. In the present embodiment, the number of first and second protrusions 77A and 77B are relatively two.

As shown in FIG. 23, the agitating member 4 includes a first agitating member 4A and a second agitating member 4B, which are arranged in parallel with each other in a drum radial direction E1 and sandwich the drum axis XI. In detail, the agitating member 4 includes a first agitating member 4A located at a position deviated from the drum axis XI, and a second agitating member 4B juxtaposed with the first agitating member 4A in a drum radial direction E1 and at a position deviated in an opposite direction to the first agitating member 4A.

The plurality of first protrusions 77A are located at positions opposite to the drum axis XI relative to the first agitating member 4A. The plurality of second protrusions 77B are located at positions opposite to the drum axis XI relative to the second agitating member 4B.

The protrusions 77 may be located at positions between the drum axis XI and the first agitating member 4A and between the drum axis XI and the second agitating member 4B.

When the mixing drum 3 is rotated around the drum axis XI in a lifted posture inclining backward, ingredients are lifted and fallen by the agitating member 4 and is agitated and mixed by the agitating member 4. When weight of the lifted and fallen ingredients acts on the agitating member 4 located in the lower portion of the mixing drum 3 during the mixing of the ingredients, the protrusions 77 corresponding to the agitating member 4 located in the lower portion support the agitating member 4 at positions corresponding to the lower portion of the agitating member 4, and receive the weight of the ingredients acting on the agitating member 4.

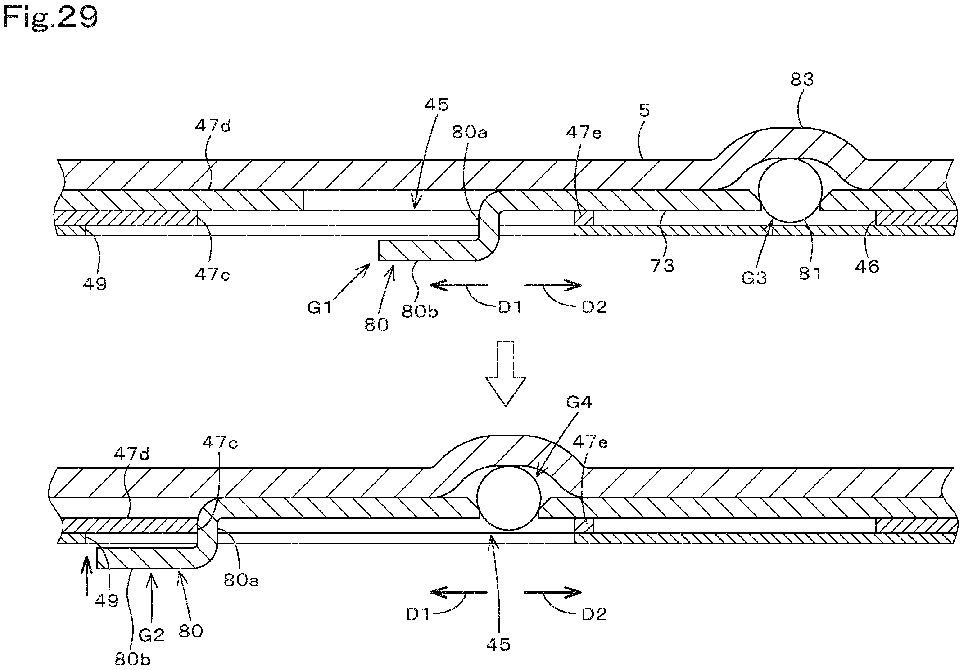

As shown in FIG. 21, the attachment plate 73 has engagement claws 80 configured to engage with the rotating disc 31 and to restrict the mixing drum 3 (that is, the attachment plate 73) from being disengaged from the rotating disc 31. The engagement claws 80 can be inserted through the insertion holes 45 when the attachment plate 73 (that is, the mixing drum 3) is placed on the rotating disc 31 (see FIG. 29). As shown in FIG. 24, the attachment plate 73 is housed in the housing recess portions 74 so that the engagement claws 80 do not project from the housing recess portions 74 (that is, do not project downward from the mounting portion 75). Thus, when the mixing drum 3 is mounted on a mounting surface, the engagement claws 80 can be prevented from hitting the mounting surface and thus from being damaged.

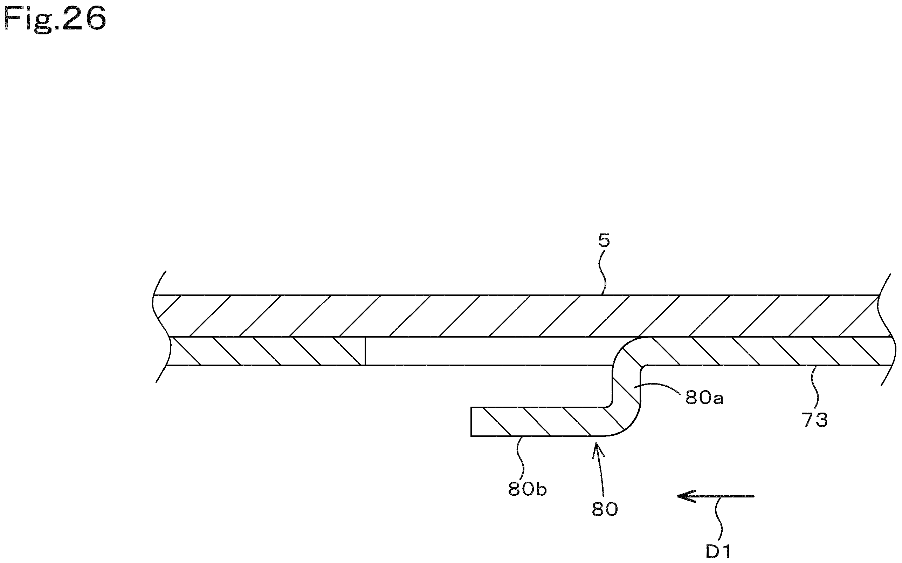

As shown in FIG. 26, the engagement claws 80 are formed by cutting and raising a plate material forming the attachment plate 73, and have base pieces 80a extending downward from the attachment plate 73 in a normal direction, and engagement pieces 80b extending from the lower ends of the base pieces 80a in the setting direction D1.

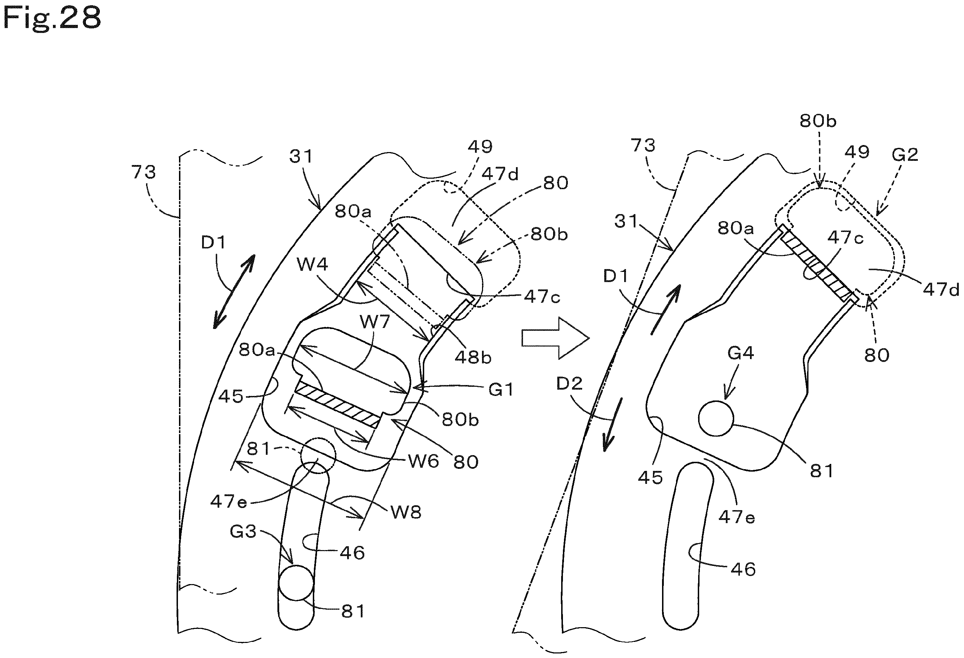

As shown in FIG. 28, widths W6 of the base pieces 80a are slightly narrower than the width W4 of the second portion 48b. Widths W7 of the engagement pieces 80b are wider than the widths W6 of the base pieces 80a and narrower than the width W8 of the insertion hole 45. The widths W7 of the engagement pieces 80b are wider than the width W4 of the second portion 48b. The engagement pieces 80b are also sized to engage with the locking grooves 49.

As shown in FIG. 7, the engagement claws 80 include a first engagement claws 80A to be inserted through the first insertion hole 45A and a second engagement claws 80B to be inserted through the second insertion hole 45B. Two pairs of the first and second engagement claws 80A and 80B are provided. As shown in FIG. 21, the first pair of first engagement claws 80A1 and second engagement claws 80B1 and the second pair of first engagement claws 80A2 and second engagement claws 80B2 are formed with a phase difference of 90° in a circumferential direction J2 (referred to as a drum circumferential direction) of the mixing drum 3.

The number of the engagement claws 80 correspond to the number of the insertion holes 45.

As shown in FIG. 21, the mixing drum 3 has ball members 81. The ball members 81 are steel balls. The ball members 81 are inserted into the engagement grooves 46 when the attachment plate 73 (that is, the mixing drum 3) is mounted on the rotating disc 31.

As shown in FIG. 7, the ball members 81 include a first ball member 81A and a second ball member 81B. In the present embodiment, the first ball member 81A is located behind the first engagement claws 80A1 of the first pair in the setting direction D1, and the second ball member 81B is located behind the second engagement claws 80B1 of the first pair in the setting direction D1.

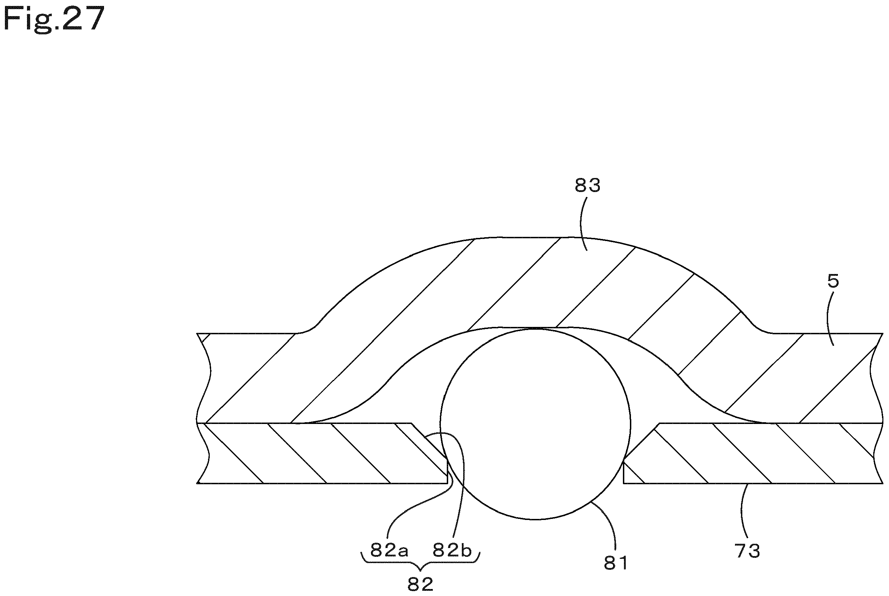

As shown in FIG. 27, the ball members 81 are located between the attachment plate 73 and the bottom portion 5, are inserted into attachment holes 82 formed through the attachment plate 73, and are pressed by pressing portions 83 formed integrally on the bottom portion 5. Lower portions 82a of the attachment holes 82 are formed as circular holes with diameters smaller than those of the ball members 81, and upper portions 82b of the attachment holes 82 are formed as tapered holes that gradually expands upwardly. The ball members 81 partially project downward from the attachment holes 82.

The attachment plate 73 (that is, the mixing drum 3) is attached (set) to the rotating disc 31 in the following manner.

As shown in FIG. 7, for example, the mixing drum 3 is placed on the rotating disc 31 so that the first engagement claws 80A1 is inserted through the first insertion hole 45A1 and the second engagement claws 80B1 is inserted through the second insertion hole 45B1. Then, the first engagement claws 80A2 is inserted through the first insertion hole 45A2 and the second engagement claws 80B2 is inserted through the second insertion hole 45B2, and the first ball member 81A is inserted into the first engagement groove 46A, and the second ball member 81B is inserted into the second engagement groove 46B.

When the mixing drum 3 is rotated by a predetermined angle in the setting direction D1 from this state, the engagement claws 80, as shown in FIGS. 28 and 29, move from insertion positions G1 at which the engagement claws 80 are inserted through the insertion holes 45 shown in a left view of FIG. 28 and an upper view of FIG. 29 to set positions G2 shown in a right view of FIG. 28 and a lower view of FIG. 29. In the set positions G2, the engagement pieces 80b are located below the restriction walls 47d, and the engagement pieces 80b can restrict the mixing drum 3 (that is, the attachment plate 73) from being detached from the rotating disc 31. In the setting position G2, the base pieces 80a are in contact with the rotation transmitting portions 47c, and thus a rotation force can be transmitted from the rotating disc 31 to the attachment plate 73. Accordingly, by rotating the rotating disc 31 in the rotating direction D2, the rotation transmitting portions 47c press the base pieces 80a, and the mixing drum 3 rotates with the attachment plate 73.

The ball members 81 move from the positions G3 at which the ball members 81 are inserted into the engagement grooves 46 shown in the left view of FIG. 28 and the upper view of FIG. 29 to the positions G4 at which the ball members 81 are inserted into the insertion holes 45 shown in the right view of FIG. 28 and the lower view of FIG. 29. In this movements, the ball members 81 move from the positions G3 to the positions G4 by riding over the partition portions 47e between the insertion holes 45 and the engagement grooves 46. During the ball members 81 are riding over the partition portions 47e, the attachment plate 73 is restricted from separating from the rotating disc 31 by the engagement pieces 80b contacting to the lower surface of the rotating disc 31, and the upward movements of the ball members 81 are allowed by the elastic deformation of the plastic pressing portions 83.

In a state where the attachment plate 73 is attached to the rotating disc 31, the attachment plate 73 will not detach from the rotating disc 31 unless the mixing drum 3 is forcibly rotated in a direction opposite to the setting direction D1 by a force that enables the ball members 81 to ride over the partition portions 47e. That is, the ball members 81 restrict the attachment plate 73 from detaching from the rotating disc 31.

As described above, the attachment plate 73 (mixing drum 3) can be easily attached (set) to the rotating disc 31 by simply rotating the mixing drum 3 in the setting direction D1.

In placing the attachment plate 73 on the rotating disc 31, the mixing drum 3 may be placed on the rotating disc 31 so that the first engagement claws 80A1 is inserted through the second insertion hole 45B1 and the second engagement claws 80B1 is inserted through the first insertion hole 45A1. In this case, the second engagement claws 80B2 is inserted through the first insertion hole 45A2, and the first engagement claws 80A2 is inserted through the second insertion hole 45B2, and the first ball member 81A is inserted into the second engagement groove 46B and the second ball member 81B is inserted into the first engagement groove 46A.

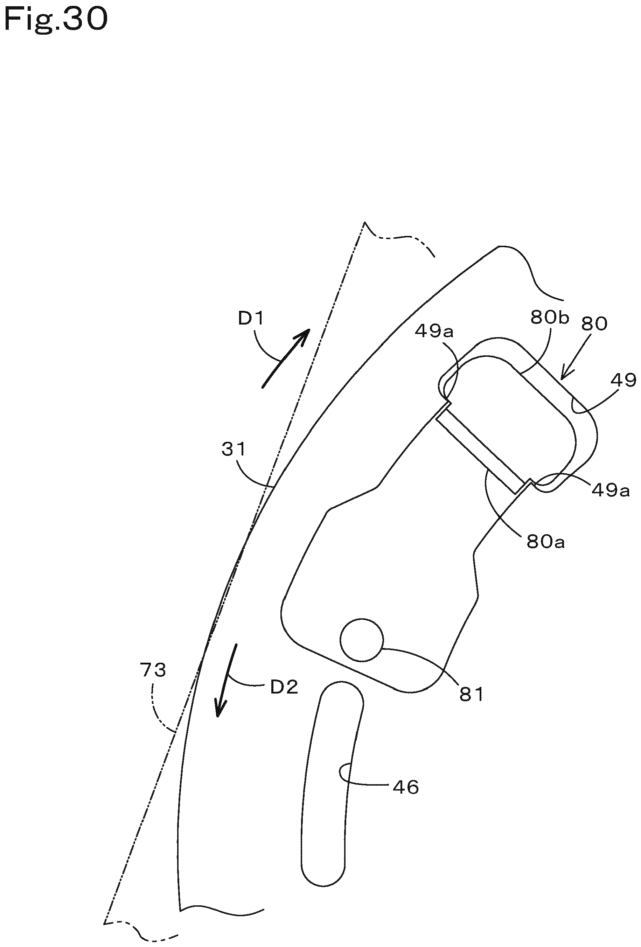

After the mixing drum 3 is attached to the rotating disc 31 as described above, the support frame 10 is swung upward from the attachment position P1 to the operating position P2 to rotate the mixing drum 3. In this operation, the engagement pieces 80b of the engagement claws 80 engage with the locking grooves 49 (see an arrowed line in the lower view of FIG. 29). That is, the engagement claws 80 engage with the locking grooves 49 when the rotating disc 31 is moved from the attachment position P1 to the operating position P2 in a state where the engagement claws 80 are in the setting position G2. In detail, when the support frame 10 is swung from the attachment position P1 to the operating position P2, the center of gravity of the mixing drum 3 is positioned behind the attachment plate 73 (that is, the drum lid 8), so weights of the mixing drum 3 and the ingredients causes the attachment plate 73 to move away from the rotating disc 31, and the engagement pieces 80b engage with the locking grooves 49 (see an arrowed line in FIG. 29). When the engagement claws 80b engage with the locking grooves 49, the rotation of the attachment plate 73 relative to the rotating disc 31 is restricted in the rotational direction. That is, as shown in FIG. 30, when the engagement claws 80b engage with the locking grooves 49, the engagement claws 80b contact to edges 49a of the locking grooves 49 in the rotational direction in a case where the attachment plate 73 is rotated relative to the rotating disc 31 in the direction opposite to the setting direction D1 (that is, in the rotational direction D2), thereby restricting the rotation of the attachment plate 73 relative to the rotating disc 31.

A case in which the attachment plate 73 rotates relative to the rotating disc 31 in the rotational direction may be, for example, a case in which the mixing drum 3 rotates faster than the rotation of the rotating disc 31 due to the load acting on the mixing drum 3 from the ingredients in the rotational direction D2 when the ingredients move inside the mixing drum 3 during the mixing drum 3 is being rotated.

As shown in FIGS. 21 and 22, the attachment plate 73 has a through hole 84 formed in the center. The through hole 84 is formed through the attachment plate 73. The bottom portion 5 has a recess portion 85 formed in the center. The recess portion 85 is recessed upward and is formed integrally on the bottom portion 5. In detail, the recess portion 85 is cylindrical in shape with a downward opening and a closed upper portion.

As shown in FIG. 6, the through hole 84 is a hole through which the head portion 39c is inserted to avoid interference between the attachment plate 73 and the fixture 39 in placing the attachment plate 73 on the rotating disc 31. The recess portion 85 houses the head portion 39c of the fixture 39 and avoids interference between the head portion 39c and the bottom portion 5 in placing the attachment plate 73 on the rotating disc 31.

As shown in FIG. 21, the through hole 84 has a small diameter portions 86 and a large diameter portions 87. As shown in an enlarged view of a section HI in FIG. 21, the small diameter portions 86 include a first small diameter portion 86A and a second small diameter portion 86B that are opposed each other in the drum radial direction E1. The large diameter portions 87 are formed between the first small diameter portion 86A and the second small diameter portion 86B, and include a first large diameter portion 87A and a second large diameter portion 87B that are opposed in the drum radial direction E1.

As shown in FIGS. 6 and 21, the small diameter portions 86 are proximate to the head portion 39c (that is, the flange portion 39b) and regulate a position of the attachment plate 73 with respect to the head portion 39c. The large diameter portion 87 is formed with a larger diameter than the small diameter portion 86 and the recess portion 85.

For example, when the through hole 84 is formed of a circular hole with the diameter of the small diameter portion 86, as shown in FIG. 6, it becomes hard to clean dust or the like accumulates between the wall portion 84a around an edge of the through hole 84 and an R-portion 85a of the recess portion 85 at the base portion. In contrast, in the present embodiment, since the large diameter portion 87 is provided in the through hole 84, the cleaning between the wall portion 84a and the R-portion 85a can be easily performed.

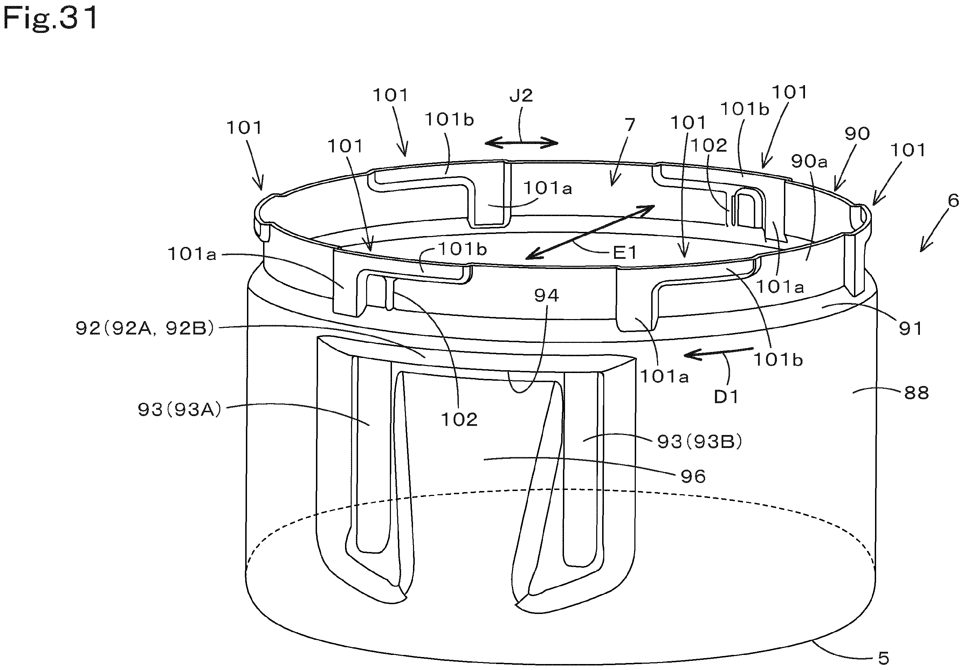

As shown in FIGS. 31 to 33, the drum body 6 has the above-described bottom portion 5, a cylindrical body portion 88, a cylindrical drum opening portion 90 which is a wall portion located above the body portion 88 (that is, on one end in the direction of drum axis XI) and forming an opening of the drum body 6, and a connecting portion 91 to connect the body portion 88 to the drum opening portion 90. The drum opening portion 90 is a portion to which the drum lid 8 is fitted, and is formed with a slightly smaller diameter than the body portion 88. The connecting portion 91 gradually shrinks in diameter upwardly from the upper end of the body 88 to connect to the drum opening portion 90. The lower end of the body portion 88 (that is, the other end in the direction of drum axis XI) is closed by the bottom portion 5.

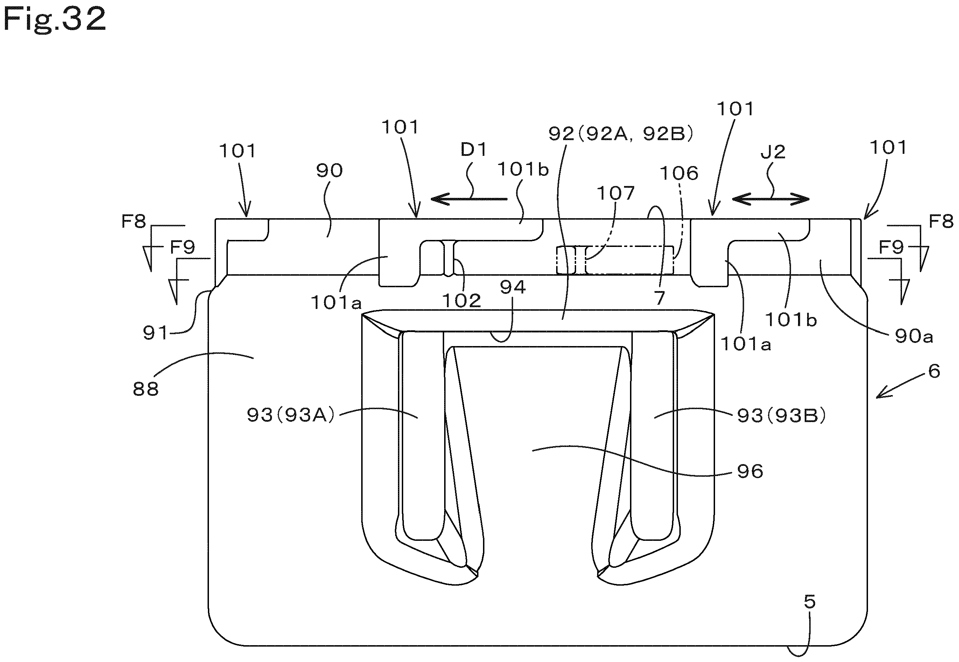

As shown in FIGS. 23 and 32, the body portion 88 has handle portions 92 for holding the drum body 6 and retaining grooves 93 for attachment and retaining of the agitating member 4.

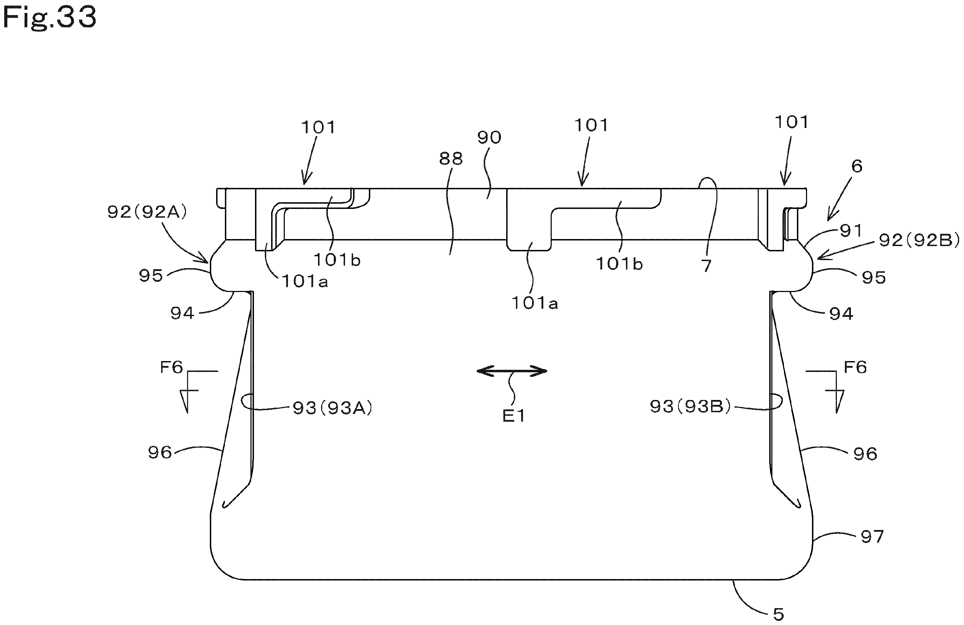

As shown in FIGS. 23 and 33, the handle portions 92 include a first handle portion 92A and a second handle portion 92B opposed to each other in the drum radial direction E1. The first handle portion 92A is provided on one side of the drum body 6, and the second handle portion 92B is provided on the other side of the drum body 6.

As shown in FIG. 8, the mixing drum 3 is placed and attached to the rotating disc 31 with the first and second handles 92A and 92B facing the sides of the machine body 2. To explain specifically in the example of FIG. 8, the mixing drum 3 is placed on the rotating disc 31 with the first handle portion 92A located on the left side of the mixing drum 3 (that is, the machine body 2) and the second handle portion 92B located on the right side of the mixing drum 3 (that is, machine body 2). The mixing drum 3 may be placed on the rotating disc 31 with the first handle portion 92A located on the right side of the mixing drum 3 and the second handle portion 92B located on the left side of the mixing drum 3.

When the mixing drum 3 is placed on the rotating disc 31 with the first and second handles 92A and 92B facing the sides of the machine body 2, the engagement claws 80 are inserted through the insertion holes 45 (that is, the rotating disc 31) since the rotating disc 31 is always in the home position at the attachment position P1. Accordingly, by placing the mixing drum 3 on the rotating disc 31 with the first and second handles 92A and 92B facing the sides of the machine body 2, the engagement claws 80 can be easily inserted into the insertion holes 45 without any matching marks.

As shown in FIG. 22, the handle portions 92 are formed integrally on the drum body 6 (that is, the body portion 88). The handle portions 92 have inwardly-protruding walls 94 formed by partially protruding a wall forming the body portion 88 inwardly in the drum radial direction E1, and connecting portions 95 extending upward from an end of the inwardly-protruding wall 94 on the outward side in the drum radial direction E1 and connected to the connecting portion 91. The handle portions 92 have widths in the drum circumferential direction J2 such that four fingers, excluding the thumb, of the user can be inserted below the inwardly-protruding walls 94.

As shown in FIG. 22, the drum body 6 has an inclined wall 96 inclining outwardly in the drum radial direction E1 and downwardly (toward the bottom portion) from inner ends of the inwardly-protruding walls 94 in the drum radial direction E1.

As shown in FIG. 22, the drum body 6 has a cylindrical circumferential wall 97 in the lower portion (on the bottom side). The cylindrical circumferential wall 97 has a smooth surface with no irregularities in the circumferential direction on the outer circumference. The first roller 44A and the second roller 44B contact to the outer circumference of the cylindrical circumferential wall 97. By contacting to the cylindrical circumferential wall 97, the first roller 44A and the second roller 44B guide the rotation of the mixing drum 3 well in attaching the mixing drum 3 to the rotating disc 31 by rotating the mixing drum 3 around the drum axis XI, and support the rotation of the mixing drum 3 well in rotating the mixing drum 3 to mix a plurality of ingredients.

The cylindrical circumferential wall 97 is formed below the inclined wall 96 and connected to the bottom portion 5. The width of the inclined wall 96 in the drum circumferential direction J2 is formed to be narrower downwardly. Outer and inner surfaces of the cylindrical circumferential wall 97 are connected to outer and inner surfaces of the inclined wall 96 without steps. The inner surface of the inclined wall 96 is connected to the inner surface of the cylindrical circumferential wall 97 without steps, and the inclined wall 96 is connected to the inwardly-protruding wall 94 in an inclined shape inclining inwardly upward in the drum radial direction E1, and accordingly ingredients can be smoothly taken out from the drum body 6.

As shown in FIG. 23, the retaining grooves 93 have one-side retaining groove 93A formed to hold one side of the agitating member 4 and adjacent to the first handle portion 92A in the drum circumferential direction J2, and another-side retaining groove 93B formed to hold the other side of the agitating member 4 and adjacent to the second handle portion 92B in the drum circumferential direction J2. Since the present embodiment has two pieces of agitating members 4, the one-side retaining groove 93A includes a first retaining groove 93A1 and a second retaining groove 93A2, and the other-side retaining groove 93B includes a third retaining groove 93B1 and a fourth retaining groove 93B2.

To explain with an example shown in FIG. 23, one side of the first agitating member 4A is retained by the first retaining groove 93A1, and the other side is retained by the third retaining groove 93B1. In addition, one side of the second agitating member 4B is retained by the second retaining groove 93A2, and the other side is retained by the fourth retaining groove 93B2. One side of the first agitating member 4A may be retained by the second retaining groove 93A2, and the other side may be retained by the fourth retaining groove 93B2. In this case, one side of the second agitating member 4B is retained by the first retaining groove 93A1, and the other side is retained by the third retaining groove 93B1.

As shown in FIG. 23, the first handle portion 92A is formed from the first retaining groove 93A1 to the second retaining groove 93A2, and the second handle portion 92B is formed from the third retaining groove 93B1 to the fourth retaining groove 93B2.

By forming the retaining grooves 93 adjacent to the handle portions 92, the strength of the drum body 6 can be improved.

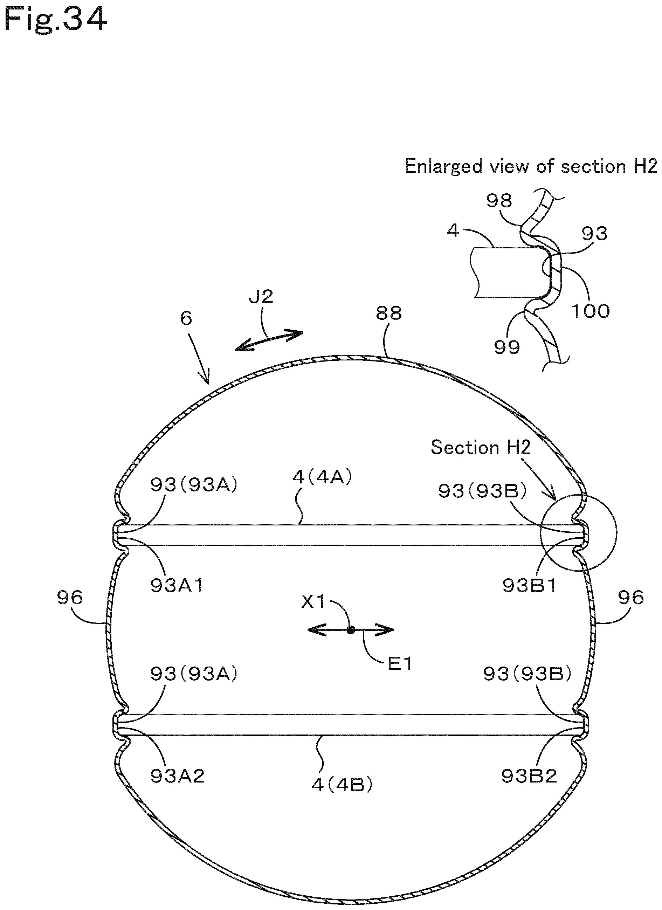

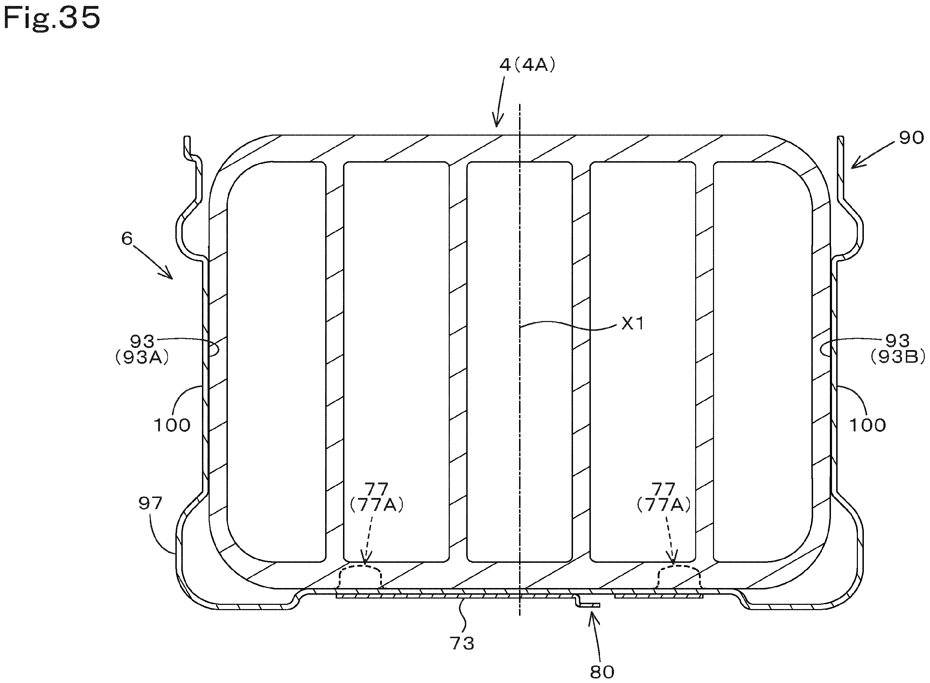

As shown in FIG. 34, the retaining grooves 93 have first bulges 98 and second bulges 99 formed by protruding a wall portion forming the drum body 6 inwardly in the drum radial direction E1 and spaced apart in the drum circumferential direction J2, and groove bottom walls 100 connecting the first bulges 98 to the second bulges 99. The first bulges 98, the second bulges 99, and the groove bottom walls 100 extend in the direction of drum axis XI. Accordingly, the retaining grooves 93 are formed in the direction of drum axis XI, as shown in FIG. 35.

As shown in FIG. 23, the retaining grooves 93 are located inward of the drum opening portion 90 in the drum radial direction E1, and the agitating member 4 can be inserted into the retaining grooves 93 from the drum opening portion 90.

As shown in FIGS. 31 and 32, the retaining grooves 93 are formed downwardly from the inwardly-protruding wall 94. As shown in FIGS. 24 and 35, the retaining grooves 93 are formed above the cylindrical circumferential wall 97 to form the cylindrical circumferential wall 97. Accordingly, the agitating member 4 projects downwardly from the retaining grooves 93 to contact to the bottom portion 5, and the protrusions 77 supports the portions that project downwardly from the retaining grooves 93 (that is, the portions that are not supported by the retaining grooves 93).

As shown in FIGS. 23 and 31, the drum opening portion 90 has a plurality of engagement portions 101 (referred to as first engagement portions). The plurality of first engagement portions 101 are formed at equal intervals in the drum circumferential direction J2. Specifically, six first engagement portions 101 are provided in 60° intervals in the drum circumferential direction. Each of the first engagement portions 101 protrudes outwardly from a base wall 90a of the drum opening portion 90 in the drum radial direction E1. Each of the first engagement portions 101 has a first portion 101a formed in a direction parallel to the direction of drum axis XI and a second portion 101b extending from an upper end of the first portion 101a in a direction opposite to the setting direction D1.

The drum opening portion 90 has a plurality of engagement protrusions 102. In the present embodiment, two engagement protrusions 102 are provided. The engagement protrusions 102 are provided at the locations where two of the plurality of first engagement portions 101 opposed to each other in the drum radial direction E1 are formed. Each of the engagement protrusions 102 protrudes outwardly in the drum radial direction E1 and is formed in a direction parallel to the drum axial direction. The engagement protrusions 102 are extended downwardly from the second portions 101b and are spaced apart from the first portion 101a in the drum circumferential direction J2.

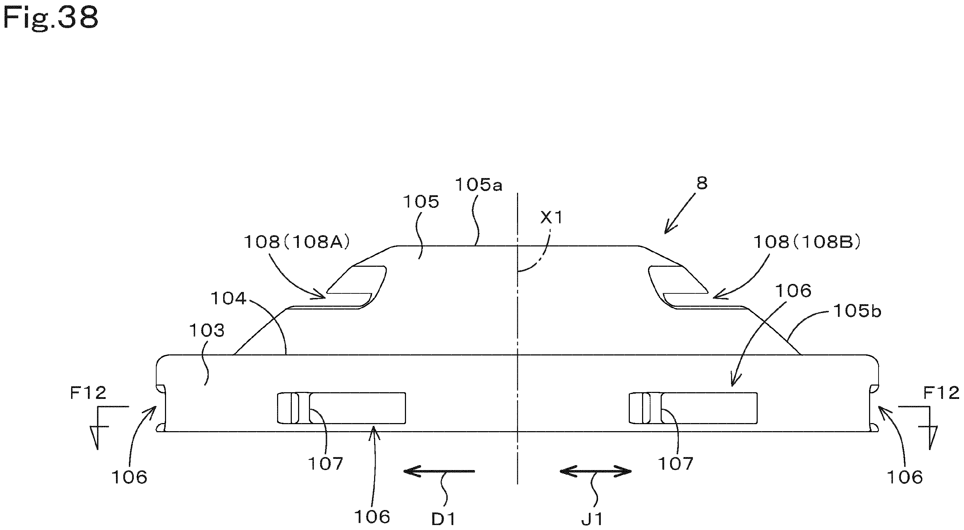

As shown in FIGS. 38 to 41, the drum lid 8 has a circumferential wall 103 surrounding an outer circumference of the drum opening portion 90, a ring-shaped annular wall portion 104 extending inwardly from an end of the circumferential wall 103 in the drum radial direction E1, and a body wall 105 connected to the annular wall portion 104 and being gradually narrower from the inner circumferential end (that is, an opening) of the annular wall portion 104 toward the direction of drum axis XI and a direction opposite to the bottom portion 5. Specifically, the body wall 105 has a dome shape (that is, a part of sphere). That is, the body wall 105 is a dome wall that gradually shrinks in diameter in the direction of drum axis XI and the direction opposite to the bottom portion 5. The body wall 105 is not limited to the dome shape. For example, the body wall 105 may be a truncated cone shape.

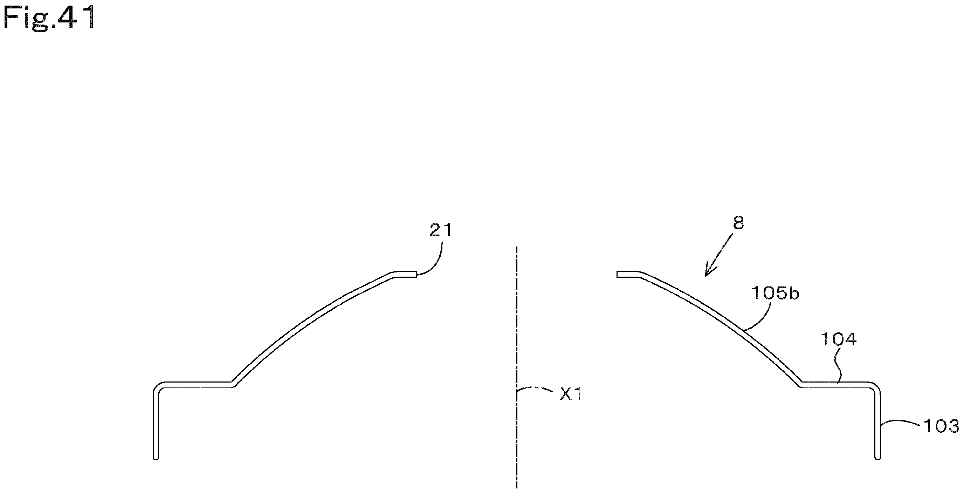

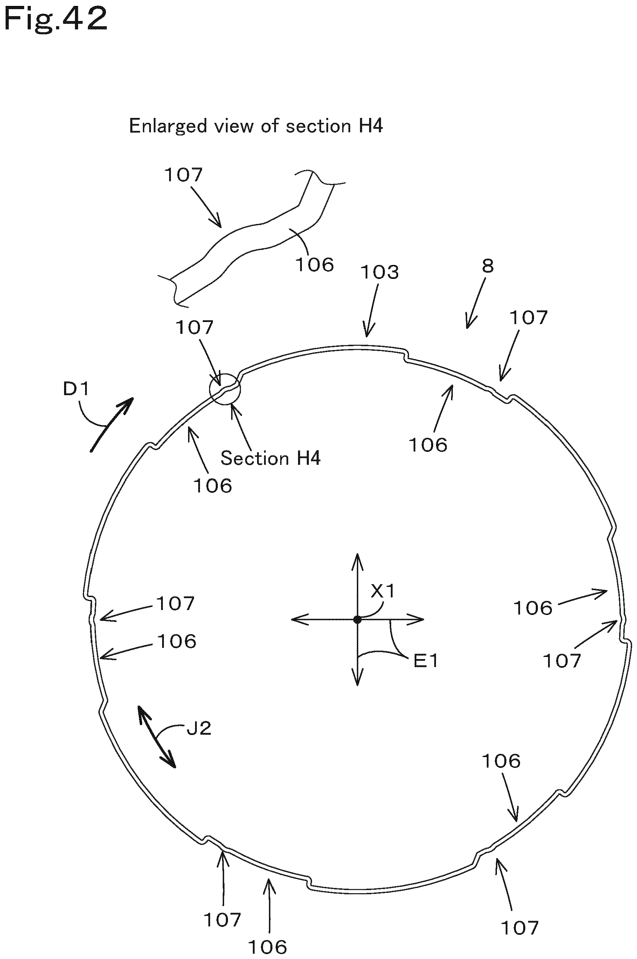

As shown in FIG. 42, the drum lid 8 has a plurality of engagement portions 106 (referred to as second engagement portions) that are formed integrally on the circumferential wall 103 and engage with the first engagement portions 101. The plurality of second engagement portions 106 are formed at equal intervals in the drum circumferential direction J2. Specifically, six second engagement portions 106 are provided at 60° intervals in the drum circumferential direction J2. Each of the second engagement portions 106 protrudes inwardly from the circumferential wall 103 in the drum radial direction E1. As shown in FIG. 41, each of the second engagement portions 106 is formed below the annular wall portion 104.

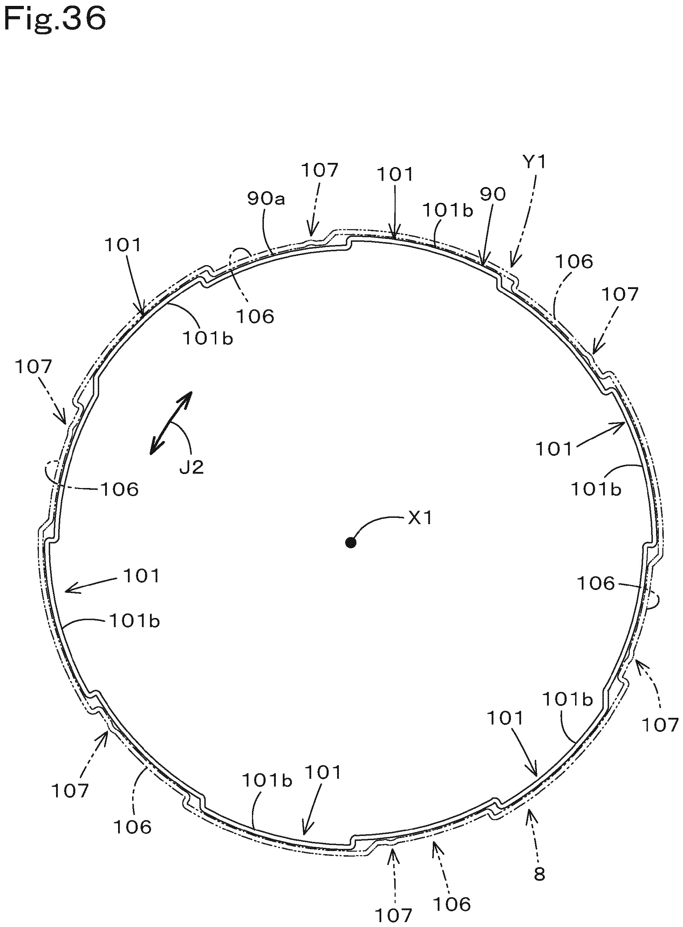

As shown in FIG. 36, widths of each of the second engagement portions 106 in the drum circumferential direction J2 are formed to be smaller than spaces between the adjacent second portions 101b of the first engagement portions 101 in the drum circumferential direction J2.

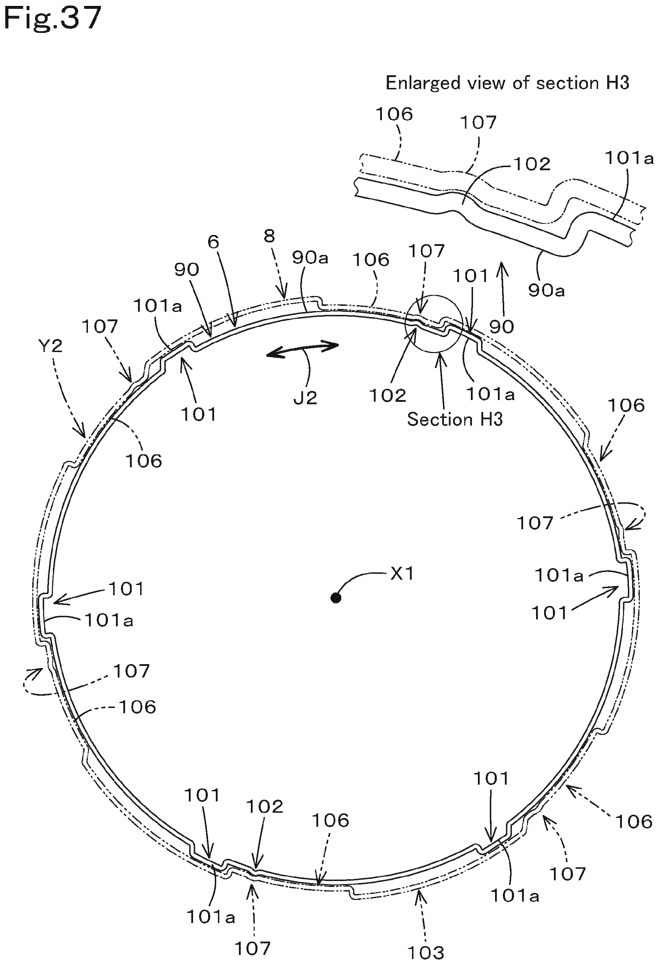

As shown in FIG. 37, the drum lid 8 has a plurality of restricting portions 107. The plurality of restricting portions 107 are formed in the same number as each of the second engagement portions 106. The restricting portions 107 are located at the sites where the second engagement portions 106 are formed. As shown in FIG. 38, the restricting portions 107 are formed in a direction parallel to the drum axis XI and are located forward on the second engagement portions 106 in the setting direction D1.

The drum lid 8 can be repositioned between a first lidding position Y1 shown in FIG. 36 and a second lidding position Y2 shown in FIG. 37.

The first lidding position Y1 is a position where the drum body 6 is closed by the lid (see FIG. 22), and the drum lid 8 can be removed from the drum body 6. In detail, as shown in FIGS. 32 and 36, in the first lidding position Y1, the second engagement portion 106 is positioned between the adjacent second portions 101b of the first engagement portions 101 in the drum circumferential direction J2. Accordingly, in this first lidding position Y1, the drum lid 8 can be moved in a direction separating away from the drum body 6, and by moving the drum lid 8 in that direction, the drum lid 8 can be removed from the drum body 6.

The second lidding position Y2 is a position where the drum lid 8 is rotated in the setting direction D1 from the first lidding position Y1 and is not removable from the drum body 6. That is, when the drum lid 8 is rotated from the first lidding position Y1 to the setting direction D1, the second engagement portions 106 are positioned under the second portions 101b of the first engagement portions 101 from the position shown by the two-dotted chain line in FIG. 32 (see FIG. 22), and the second portions 101b restricts the upward movements of the second engagement portions 106 (that is, movements in the direction of separating from the drum body 6), thereby making it impossible to remove the drum lid 8. In addition, the rotations of the second engagement portions 106 in the setting direction D1 are restricted by the first portions 101a of the first engagement portions 101. In the second lidding position Y2, the regulating portion 107 engage with the engagement protrusions 102 as shown in FIG. 37. This restricts the rotation of the drum lid 8 in the direction opposite to the setting direction D1. By forcibly rotating the drum lid 8 in the direction opposite to the setting direction D1, the restricting portions 107 are disengaged from the engagement protrusions 102, and the drum lid 8 can be rotated and moved to the first lidding position Y1. The resistance caused when the regulating portions 107 are released from the engagement protrusions 102 is smaller than the resistance caused when the ball members 81 ride over the partition portions 47e. In this manner, in rotating the drum lid 8 from the second lidding position Y2 to the first lidding position Y1 (that is, in the direction opposite to the setting direction D1), the drum body 6 can be prevented from being dragged.

After the mixing of ingredients is completed, the support frame 10 and the like are positioned to the take-out position P3, the drum lid 8 is removed from the drum body 6, and then the mixed ingredients inside the drum body 6 are taken out. In this operation, the drum lid 8 can be removed easily without holding the drum body 6.

In the present embodiment, since the regulating portions 107 are respectively located on the portions where each of the second engagement portions 106 are formed, the second engagement portions 106 can be inserted between any adjacent second portions 101b in moving the drum lid 8 to the first lidding position Y1 from the state where the drum lid 8 is removed from the drum body 6.

As shown in FIG. 22, in the drum lid 8, the annular wall portion 104 engages with (contacts to) the agitating members 4 in the position where the drum body 6 is closed by the lid, and restricts the movement of the agitating members 4.

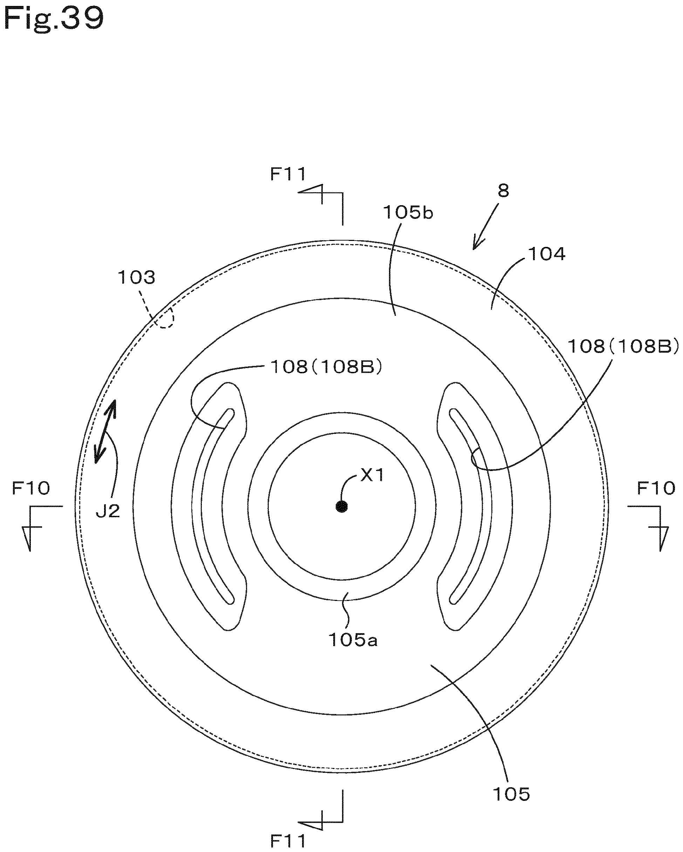

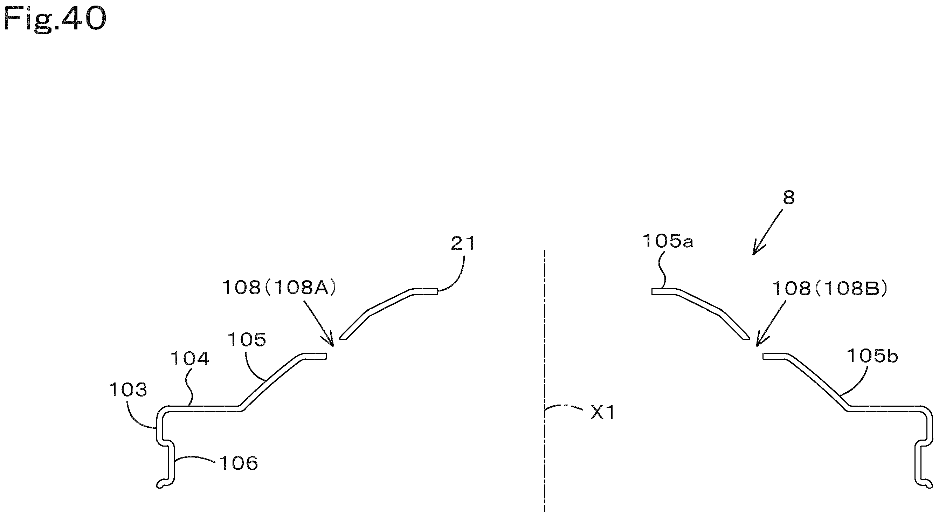

As shown in FIGS. 40 and 41, the cooling-air inlet 21 is formed at a top portion 105a of the body wall 105. As shown in FIG. 39, the cooling-air inlet 21 is formed as a circular hole.

The body wall 105 has a cooling-air outlets 108 through which the cooling air after the cooling the ingredients can be discharged. By discharging the cooling air after the cooling, new cooling air can be efficiently taken in, and accordingly the cooling performance can be improved.

The cooling-air outlets 108 are formed between the top portion 105a and the base portion 105b on the opposite side to the top portion 105a. In detail, the cooling-air outlets 108 are formed substantially in the center between the top portion 105a and the base portion 105b of the body wall 105 (that is, in the middle of the body wall 105).

By forming the cooling-air outlets 108 in the body wall 105, the cooling air after the cooling can be discharged well. That is, since the mixing drum 3 is rotated in an inclined posture with the drum lid 8 facing obliquely upward, the cooling air supplied toward the ingredient (that is, rice) in the drum body 6 rises with the steam, moves from the upper portion in the drum body 6 to the upper portion in the drum lid 8, reaches the cooling-air outlets 108, and then is discharged smoothly.

When the cooling-air outlets 108 are formed near the drum body 6, there is a possibility that ingredients may come out of the cooling-air outlets 108; however, by forming the cooling-air outlets 108 at the middle position of the body wall 105, the cooling air after the cooling can be discharged while suppressing the discharge of ingredients. The cooling air is supplied from the cooling-air feeding port 20c toward the center of the mixing drum 3; since some of the cooling air diffuses after being blown out from the cooling-air feeding port 20c, forming the cooling-air outlets 108 near the cooling-air inlet 21 may cause the introduced cooling air to be discharged directly. By forming the cooling-air outlets 108 in the middle of the body wall 105, it is possible to prevent the introduced cooling air from being discharged directly.

In the ingredient mixer 1, there is a processing step in which only agitation is performed, that is, the driving of the blower 19 is stopped (blowing of cooling air is stopped) during mixing of ingredients but the mixing drum 3 is rotated. In this step, steam can be released from the cooling-air outlets 108.

As shown in FIG. 39, the cooling-air outlets 108 include a plurality of air outlets (that is, a first air outlet 108A and a second air outlet 108B) formed at intervals in the drum circumferential direction J2. The first air outlet 108A and the second air outlet 108B are formed in arc-shaped long holes centered on the drum axis XI. The first air outlet 108A and the second air outlet 108B are formed with the same lengths in the drum circumferential direction J2 and are equally spaced in the drum circumferential direction J2. The plurality of air outlets (that is, the first air outlet 108A and the second air outlet 108B) are formed at symmetrical positions with respect to the drum axis XI (that is, the center of the drum lid 8).

The length of the first air outlet 108A in the drum circumferential direction J2 is close to a quarter of the circumferential length of the drum lid 8 at the position where the first air outlet 108A is formed, and is smaller than the space between the first air outlet 108A and the second air outlet 108B in the drum circumferential direction J2. The same is true for the length of the second air outlet 108B in the drum circumferential direction J2.

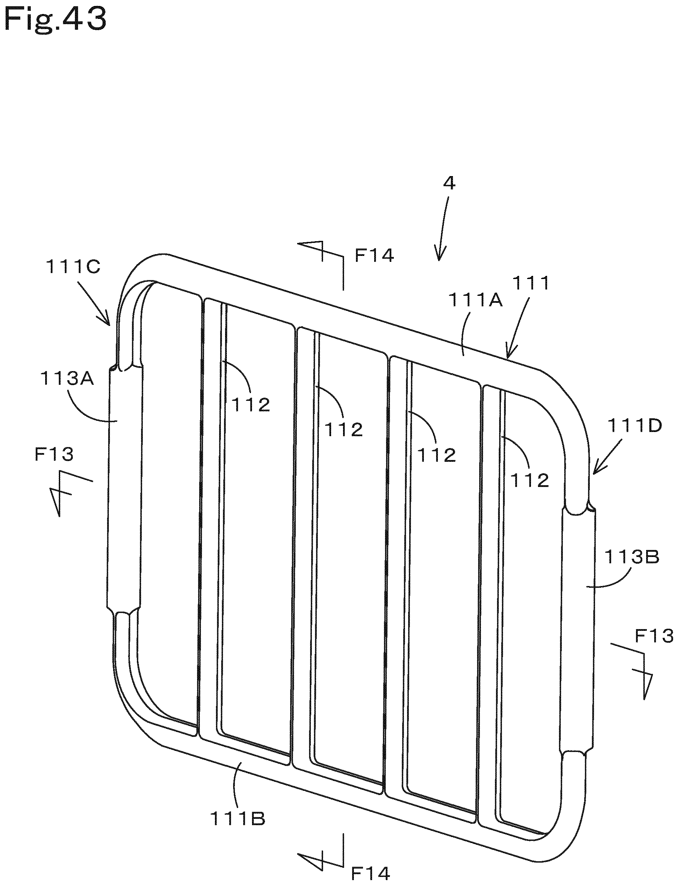

As shown in FIG. 43, the agitating members 4 have rectangular-shaped frame portions 111. The frame portions 111 have first lateral rod portions 111A, second lateral rod portions 111B, first vertical rod portions 111C, and the second vertical rod portions 111D. The first lateral rod portions 111A and the second lateral rod portions 111B are spaced apart and arranged parallel to each other. The first vertical rod portions 111C connect one ends of the first lateral rod portions 111A and the second lateral rod portions 111B to each other. The second vertical rod portions 111D connect the other ends of the first lateral rod portions 111A and the second lateral rod portions 111B.

The first vertical rod portions 111C have first insertion portions 113A, and the second vertical rod portions 111D have second insertion portions 113B. The first insertion portions 113A are located in the middle of length directions of the first vertical rod portions 111C, and the second insertion portions 113B are located in the middle of length directions of the second vertical rod portions 111D. The first insertion portions 113A and the second insertion portions 113B are inserted into the retaining grooves 93. In detail, when the first insertion portions 113A are inserted into the one of the retaining grooves 93A on one side, the second insertion portions 113B are inserted into the other one of the retaining grooves 93B on the other side. The agitating members 4 are inserted into the drum body 6 with the first lateral rod portions 111A being the upside or with the first lateral rod portions 111A being the downside.

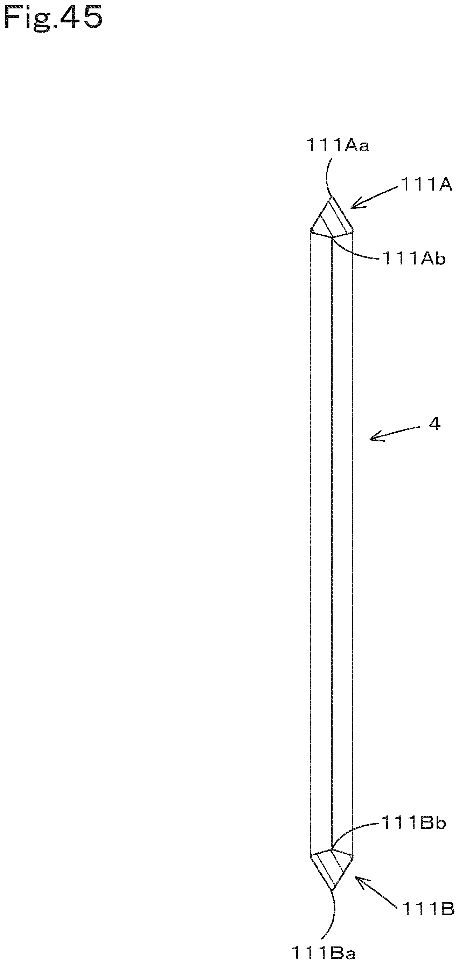

As shown in FIG. 45, the first lateral rod portions 111A are formed to be gradually narrower toward the outsides of the frame portions 111, and end portions 111Aa on the outsides of the frames are formed at acute angles. The end portions 111Ab on the insides of the frames, which are on the opposite sides to the end portions 111Aa, are formed at obtuse angles. The second lateral rod portions 111B is similarly formed to be gradually narrower toward the outsides of the frames, and the end portions 111Ba on the outsides of the frames are formed at acute angles. The end portions 111Ba on the outsides of the frames are formed with acute angles. The end portions 111Bb on the insides of the frames, which are the opposite sides of the end portions 111Ba, are formed with obtuse angles.

The portions of the first vertical rod portion 111C other than the first insertion portions 113A are formed with the same cross-sectional shapes as the first lateral rod portions 111A and the second lateral rod portions 111B. The portions of the second vertical rod portions 111D other than the second insertion portions 113B are also formed in the same cross-sectional shapes as the first lateral rod portions 111A and the second lateral rod portions 111B.

The agitating members 4 have a plurality (four) of connecting rod portions 112. The connecting rod portions 112 are respectively located between the first lateral rod portions 111A and the second lateral rod portions 111B. The plurality of connecting rod portions 112 are arranged in parallel between the first and second vertical rod portions 111C and 111D, spaced apart in the length directions of the first and second horizontal rods 111A and 111B.

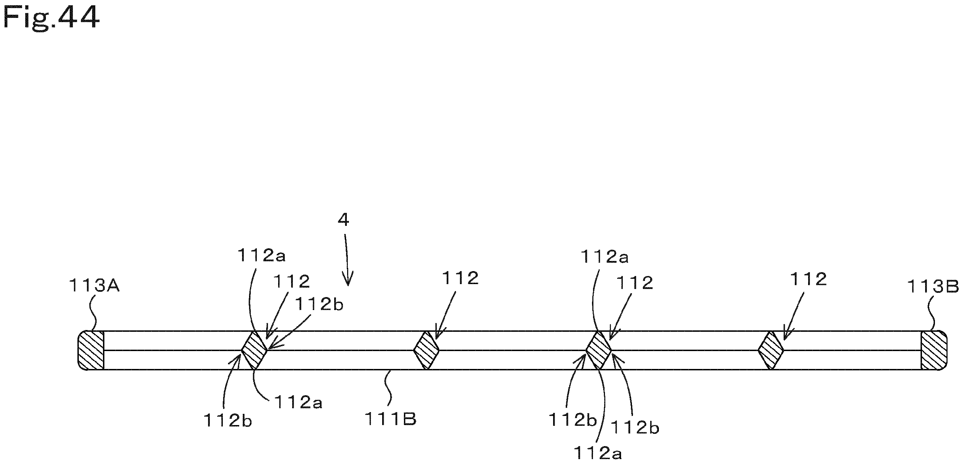

As shown in FIG. 44, the connecting rod portions 112 are diamond-shaped in cross-section, with the obtuse angle portions 112b in the diamond shapes facing in directions parallel to the longitudinal directions of the first lateral rod portions 111A and the second lateral rod portions 111B. Thus, the acute angle portions 112a in the cross sections of the connecting rod portions 112 face directions orthogonal to the length directions of the first and second vertical rods 111C and 111D and the length directions of the first and second horizontal rods 111A and 111B. The acute angle portions 112a of the connecting rod portions 112 allow good loosing of rice.

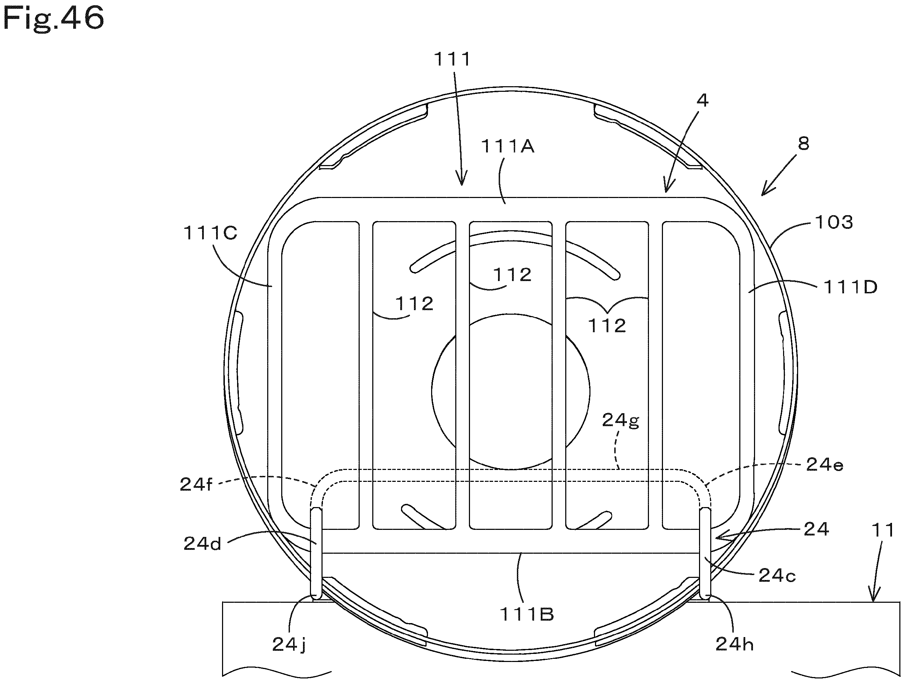

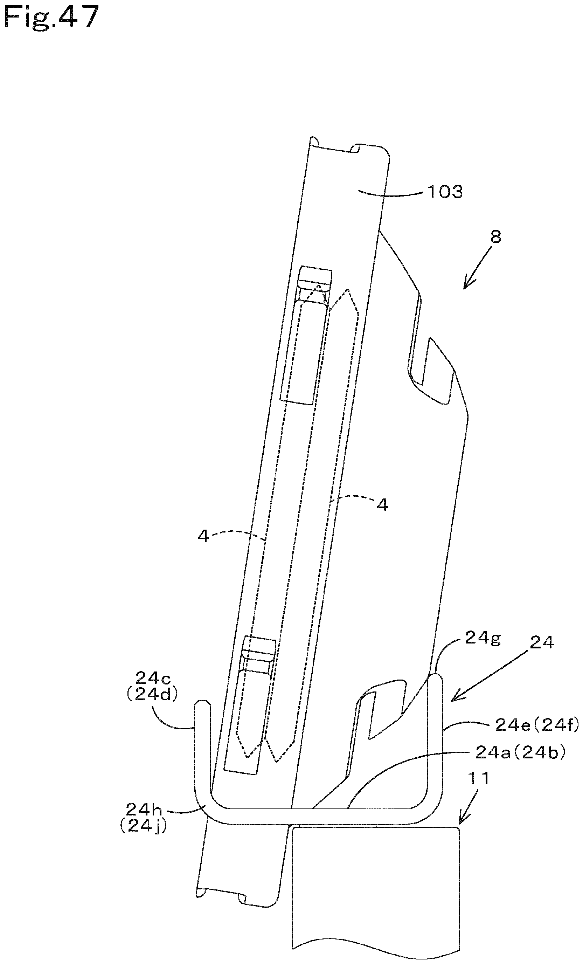

As shown in FIGS. 46 and 47, the drum lid 8 can house the agitating members 4 removed from the drum body 6 inside the circumferential wall 103. In detail, the width of the circumferential wall 103 is formed to be larger than twice a thickness of a piece of agitating members 4, and thus two pieces of agitating members 4 can be stacked and housed inside the circumferential wall 103.

As shown in FIGS. 46 and 47, the drum lid 8 can be retained on the retaining member 24 with the agitating members 4 being housed. When retaining the drum lid 8 on the retaining member 24, the circumferential wall 103 of the drum lid 8 is placed on the first and second rod portions 24a and 24b. Then, the forward movement of the drum lid 8 is restricted by a corner portion 24h between the first rod portion 24a and the third rod portion 24c, and a corner portion 24j between the second rod portion 24b and the fourth rod portion 24d, and the seventh rod portion 24g restricts the drum lid 8 from falling down backward. In this manner, the drum lid 8 is retained in the retaining member 24.

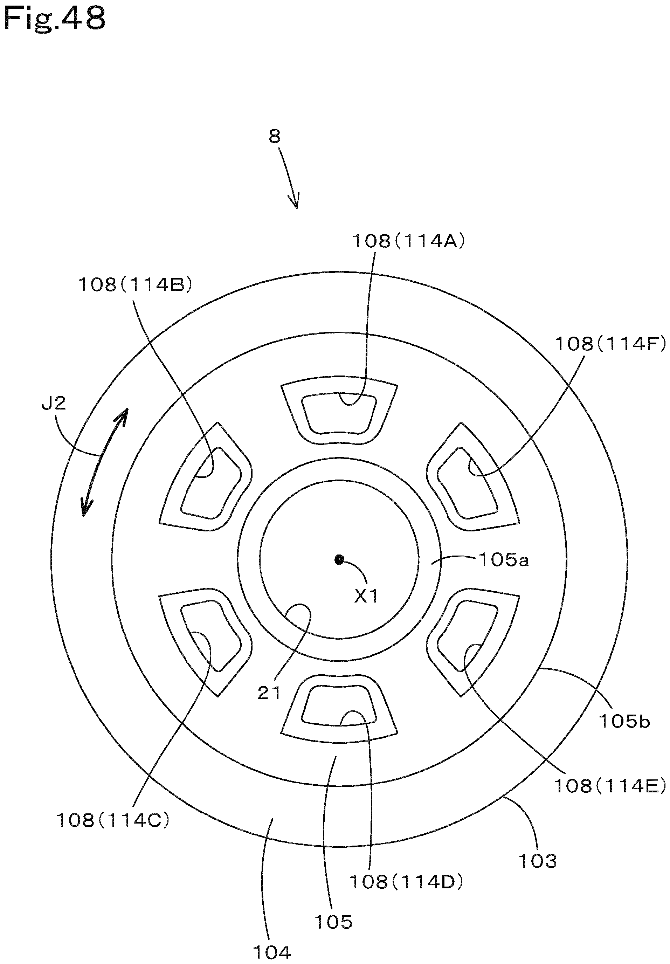

FIG. 48 shows a plan view of a modified example of the drum lid 8.

In the drum lid 8 according to the modified example, the cooling-air outlets 108 include six air outlets 114A to 114F formed at intervals in the drum circumferential direction J2.

In the drum lid 8 according to the modified example, the cooling-air outlets 108 are formed in the body wall 105 and in the middle position (that is, a halfway position) between the top portion105a and the base portion 105b. In other words, the cooling-air outlets 108 is formed substantially at the center of the body wall 105 in the drum axis XI.

The lengths of the air outlets 114A to 114F in the drum circumferential direction J2 are formed to be the same lengths, and the air outlets 114A to 114F are formed at equal intervals in the drum circumferential direction J2. The air outlets 114A to 114F are formed at symmetrical positions with respect to the drum axis XI.

The ingredient mixer 1 according to the present embodiment provides the following effects.

The ingredient mixer 1 includes the machine body 2, the mixing drum 3 which is supported on the machine body 2 rotatably about the axis XI defining an axial direction XI of the mixing drum 3 and which is configured to rotate to mix a plurality of ingredients housed in an inside thereof. The mixing drum 3 includes the drum body 6 having one and the other end surfaces in the axial direction XI. The one end surface is open to serve as the opening portion of the drum body 6, and the other end surface is closed to serve as the bottom portion 5 of the drum body 6. The drum body 6 includes the handle portion 92 for holding the drum body 6. The handle portion 92 includes the inwardly-protruding wall 94 formed by partially protruding a wall forming the drum body 6 inwardly in the drum radial direction E1, and the inclined wall 96 inclining outwardly in the drum radial direction E1 and downwardly from inner ends of the inwardly-protruding walls 94 in the drum radial direction E1.

According to this configuration, the drum body 6 can be easily held by forming the handle portion 92 for holding the drum body 6, including the inwardly-protruding wall 94 formed by partially protruding a wall forming the drum body 6 inwardly in the drum radial direction E1.

In addition, according to the inclined wall 96 inclining outwardly in the drum radial direction E1 and downwardly from inner ends of the inwardly-protruding walls 94 in the drum radial direction E1, ingredients housed inside the mixing drum 3 can be smoothly taken out.

The handle portion 92 includes the first handle portion 92A and the second handle portion 92B opposed to the first handle portion 92A in the radial direction E1.

According to this configuration, the mixing drum 3 can be held well.

The ingredient mixer 1 includes the at least one agitating member 4 that is attached to the inside of the mixing drum 3 to agitate ingredients. The at least one agitating member 4 is located at an eccentric position with respect to the axis XI and transverses the drum body 6. The drum body 6 includes the at least one one-side retaining groove 93A extended in the axial direction XI to hold one side of the at least one agitating member 4 and adjacent to the first handle portion 92A in the drum circumferential direction J2, and the at least one other-side retaining groove 93B extended in the axial direction XI to hold the other side of the at least one agitating member 4 and adjacent to the second handle portion 92B in the drum circumferential direction J2.

According to this configuration, the agitating member 4 can be attached in a position deviated from the axis XI, so that the first and second handle portions 92A and 92B can be well formed on both sides of the center of the mixing drum 3.

The at least one agitating member 4 includes the first agitating member 4A and the second agitating member 4B juxtaposed in the radial direction E1 of the mixing drum 3 with the axis XI located between them. The at least one one-side retaining groove 93A includes the first retaining groove 93A1 that retains one side of the first agitating member 4A and the second retaining groove 93A2 that retains one side of the second agitating member 4B, and the at least one other-side retaining groove 93B includes the third retaining groove 93B 1 that retains the other side of the first agitating member 4A and the fourth retaining groove 93B2 that retains the other side of the second agitating member 4B. The first handle portion 92A is extended from the first retaining groove 93A1 to the second retaining groove 93A2, and the second handle portion 92B is extended from the third retaining groove 93B1 to the fourth retaining groove 93B2.

According to this configuration, the strength of the drum body 6 can be improved by the first handle portion 92A, the second handle portion 92B, the first retaining groove 93A1, the second retaining groove 93A2, the third retaining groove 93B1 and the fourth retaining groove 93B2.

The mixing drum 3 includes the drum lid 8 that closes the opening 7 of the drum body 6. The drum lid 8 includes the circumferential wall 103 that circumferentially surrounds the wall of the drum body 6 defining the opening 7, the annular wall portion 104 that extends from the end portion of the circumferential wall 103 inwardly in the radial direction E1 of the mixing drum 3, and the body wall 105 gradually becoming narrower from the inner circumferential end of the annular wall portion 104 in the direction of drum axis XI opposite to the bottom portion 5. The annular wall portion 104 of the drum lid 8 when closing the drum body 6 restricts the movement of the agitating member 4 in the axial direction XI .

According to this configuration, by using not the drum lid 8 but the annular wall portion 104 to restrict the movement of the agitating member 4 in the axis XI direction, the movement of the agitating member 4 can be restricted no matter where the drum lid 8 is located in the circumferential direction J2 relative to the drum body 6.

The drum body 6 is provided with the roller 44 that supports the drum body 6 in rotation, the drum body 6 includes, on the bottom portion 5 side, the cylindrical circumferential wall 97 in contact with the roller 44, and the inclined wall 96 is connected to the cylindrical circumferential wall 97.

According to this configuration, the outer circumferential surface of the cylindrical circumferential wall 97 can be formed smoothly.

The ingredient mixer 1 includes the machine body 2, the mixing drum 3 supported on the machine body 2 rotatably about the axis XI of the mixing drum 3 defining the axial direction XI thereof and configured to rotate to mix a plurality of ingredients housed in the inside thereof, and the at least one agitating member 4 attached to the inside of the mixing drum 3 to agitate the ingredients. The mixing drum 3 includes the drum body 6 having one and the other end surfaces in the axial direction XI. The one end surface is open to serve as the opening portion of the drum body 6, and the other end surface is closed to serve as the bottom portion 5 of the drum body 6. The at least one agitating member 4 crosses the drum body 6 in the transverse direction and contacts the bottom of the drum body. The drum body 6 includes the at least one protrusion 77 protruding from the bottom portion 5. At least one protrusion 77 is offset from the at least one agitating member 4 in the direction crossing the transverse direction to contact the at least one agitating member 4.

According to this configuration, the agitating member 4 can be supported by the protrusion 77 that protrudes from the bottom portion 5 of the drum body 6 and contacts to the agitating member 4 from the direction intersecting the transverse direction, and the protrusion 77 is displaced in the direction intersecting the transverse direction relative to the agitating member 4 and contacts to the agitating member 4. Accordingly, the lower end of the agitating member 4 can be made contact to the bottom portion 5 of the drum body 6 to improve the agitating performance. This makes it possible to improve the agitating performance while supporting the lower portion of the agitating member 4.

The at least one agitating member 4 includes the first agitating member 4A located at the eccentric position with respect to the axis XI, and the second agitating member 4B juxtaposed with the first agitating member 4A in the radial direction of the mixing drum 3 and located at the other eccentric position opposite to the first agitating member 4A with respect to the axis X1. The at least one protrusion 77 includes the plurality of first protrusions 77A opposite to the axis XI with respect to the first agitating member 4A, and the plurality of second protrusions 77B opposite to the axis XI with respect to the second agitating member 4B.

According to this configuration, in inclining and rotating the mixing drum 3 to mix the ingredients, the weight of the ingredients falling from above and contacting to the agitating member 4 can be received by the protrusions 77.

The mixing drum includes the attachment plate 73 attached to the bottom portion 5 of the drum body 6 and rotatably attached to the machine body 2, and the at least one protrusion 77 includes the protruding body 78 formed integrally with the drum body 6 to protrude from the bottom portion 5 toward the opening portion, and the nut 79 into which the attachment tool 76 for attachment of the attachment plate 73 is screwed, the nut 79 being embedded in the protruding body 78.

According to this configuration, the protrusions 77 are provided for support of the agitating member 4 and attachment of the attachment plate 73, which simplifies the structure.

The attachment plate 73 includes the engagement claw 80 configured to engage with the machine body 2 to prevent the attachment plate 73 from being separate from the machine body 2. The drum body 6 includes, on the bottom portion 5, the housing recess portion 74 configured to house the attachment plate 73.

According to this configuration, the engagement claws 80 can be prevented from being damaged in mounting the mixing drum 3 on the a mounting surface.

The machine body 2 includes the rotation shaft 30 rotatable around the axis XI, the rotating disc 31 to which the attachment plate 73 is attached, and the fixture 39 to fix the rotating disc 31 to the rotation shaft 30. The bottom portion 5 includes the recess portion 85 to house the head portion 39c of the fixture 39 inserted through the through hole 84 formed in the attachment plate 73. The through hole 84 includes the small-diameter portion 86 adjacent to the head portion 39c of the fixture 39, and the large-diameter portion 87 having a diameter larger than diameters of the small-diameter portion 86 and the recess portion 85.

According to this configuration, the through hole 84 can be easily cleaned.

The machine body 2 is provided with the plurality of rollers 44 to guide rotation of the mixing drum 3. The drum body 6 includes the retaining groove 93 extending in the direction of axis XI and configured to retain the at least one agitating member 4, and the cylindrical circumferential wall 97 in contact with the rollers 44. The retaining groove 93 is formed on the inner surface of the drum body 6. The circumferential wall 97 is formed on a portion of the drum body 6 closer to the bottom portion 5 than the retaining groove 93. The at least one agitating member 4 has a portion protruding from the retaining groove 93 toward the bottom portion 5. The protrusions 77 support a portion of the agitating member 4 protruding from the retaining groove 93 toward the bottom portion 5.

According to this configuration, the protrusions 77 are capable of supporting a portion of the agitating member 4 where the retaining groove 93 cannot be formed because of forming the cylindrical circumferential wall 97.

In addition, the ingredient mixer 1 includes the machine body 2, and the mixing drum 3 that is supported on the machine body 2 rotatably around the axis XI and that rotates to mix a plurality of ingredients housed in the inside thereof. The machine body 2 has the rotating disc 31 rotatable around the axis XI. The mixing drum 3 includes the engagement claws 80 that are inserted into the rotating disc 31 movably to a position for restricting the mixing drum 3 from being detached from the rotating disc 31 by rotating the mixing drum 3 at a predetermined angle in the setting direction D1 around the axis XI, and the first and second handle potions 92A and 92B that face each other in the radial direction E1 of the mixing drum 3. The engagement claws 80 are inserted into the rotating disc 31 when the mixing drum 3 is placed on the rotating disc 31 with the first and second handle portions 92A and 92B facing the sides of the machine body 2.

According to this configuration, when the mixing drum 3 is placed on the rotating disc 31 with the first and second handles 92A and 92B facing the sides of the machine body 2, the engagement claws 80 are inserted through the rotating disc 31, and accordingly the engagement claws 80 can be easily inserted into the rotating plate 31, thereby making it easy to attach the mixing drum 3 to the machine body 2.

The rotating disc 31 includes the insertion holes 45 through which the engagement claws 80 are inserted, and the engagement grooves 46 formed at intervals behind the insertion holes 45 in the setting direction D1. The mixing drum 3 has the ball members 81 that are inserted into the engagement grooves 46 when the mixing drum 3 is placed on the rotating disc 31 and moves to the positions for allowing the ball members 81 to be inserted into the insertion holes 45 by riding over the partition portions 47e between the insertion holes 45 and the engagement grooves 46 when the mixing drum 3 is rotated at a predetermined angle in the setting direction D1.

According to this configuration, the mixing drum 3 can be attached by simply rotating the mixing drum 3 in the setting direction D1.

The mixing drum 3 includes the drum body 6 having an opening at one end in the direction of axis XI, and the drum lid 8 to close the opening 7 of the drum body 6. The drum lid 8 has a restricting portion 107d capable of being switched between the first lid position Y1 where the drum body 6 is closed by the drum lid 8 and the drum lid 8 can be removed from the drum body 6 and the second position Y2 where the drum body 6 is rotated in the setting direction D1 from the first lid position Y1 and the drum lid 8 cannot be detached from the drum body 6, and engages with the engagement protrusion 102 formed on the drum body 6 to restrict the drum lid 8 from rotating in the direction opposite to the setting direction D1 at the second lidding position Y2. The resistance generated when the restricting portion 107d detaches from the engagement protrusions 102 is smaller than the resistance generated when the ball members 81 ride over the partition portions 47e.

According to this configuration, in removing the drum lid 8 from the drum body 6, the drum body 6 can be prevented from being dragged.

The machine body 2 includes the support frame 10 to which the rotating disc 31 is attached, the support frame 10 has a plurality of rollers 44 that contact to the mixing drum 3 and support the rotation of the mixing drum 3, and the rotating disc 31 inclines downwardly toward the plurality of rollers 44 in the state where the mixing drum 3 is placed on the rotating disc 31.

According to this configuration, the plurality of rollers 44 can be used to position the mixing drum 3 in attaching the mixing drum 3 to the rotating disc 31, thereby facilitating the attachment of the mixing drum 3. In addition, since the rotating disc 31 is inclined downwardly toward the plurality of rollers 44, the operation of placing the mixing drum 3 on the rotating disc 31 while contacting to the rollers 44 can be facilitated.

The ingredient mixer 1 includes the home position detector 43 configured to detect the home position of the rotating disc 31, which is the position at which the mixing drum 3 is mounted, and the controller 18 that controls the rotation of the rotating disc 31 and stops the rotating disc 31 at the home position after a predetermined rotation time has elapsed.

According to this configuration, the attachment of the mixing drum 3 can be facilitated.

The insertion holes 45 include the first insertion hole 45A and the second insertion hole 45B located at symmetrical positions of the rotating disc 31 in the radial direction E1, and the engagement claws 80 include the first engagement claws 80A that are inserted through the first insertion hole 45A and the second engagement claws 80B that are inserted through the second insertion hole 45B.

According to this configuration, the mixing drum 3 can be attached to the rotating disc 31 even when the first handle portion 92A faces one side of the machine body 2 and the second handle portion 92B faces the other side of the machine body 2 and even when the first handle portion 92A faces the other side of the machine body 2 and the second handle portion 92B faces one side of the machine body 2. Accordingly, the attachment of the mixing drum 3 can be facilitated.

In addition, one or more pairs of the first engagement claw 80A and the second engagement claw 80B may be provided.

The engagement grooves 46 includes the first engagement grooves 46A formed at intervals on the rear portions of the first insertion holes 45A in the setting direction D1 and the second engagement grooves 46B formed at intervals on the rear portions of the second insertion holes 45B in the setting direction D1, and the ball members 81 include the first ball members 81A to be inserted into the first engagement grooves 46A and the second ball members 81B to be inserted into the second engagement grooves 46B.

According to this configuration, the mixing drum 3 can be attached to the rotating disc 31 even when the first handle portion 92A faces one side of the machine body 2 and the second handle portion 92B faces the other side of the machine body 2 and even when the first handle portion 92A faces the other side of the machine body 2 and the second handle portion 92B faces one side of the machine body 2. Accordingly, the attachment of the mixing drum 3 can be facilitated.

The ingredient mixer 1 includes the machine body 2, and the mixing drum 3 that is supported on the machine body 2 rotatably around the axis XI and rotates to mix a plurality of ingredients housed inside. The machine body 2 has the rotating disc 31 rotatable around the axis XI on which the mixing drum 31 is attached by placing and rotating the mixing drum 3 around the axis XI at a predetermined angle in the setting direction D1. The rotating disc 31 has the insertion holes 45 and the engagement grooves 46 formed at intervals on the rear portions of the insertion holes 45 in the setting direction D1. The mixing drum 3 has the engagement claws 80 that are inserted into the through holes 45 when placed on the rotating disc 31 and move to the setting position G2 that can restrict the mixing drum 3 from being detached from the rotating disc 31 by rotating the mixing drum 3 at a predetermined angle, and the ball members 81 that are inserted into the engagement grooves 46 when the engagement claws 80 are inserted through the through holes 45 and moves to the positions allowing the ball members 81 to be inserted into the insertion holes 45 by riding over the partition portions 47e between the insertion holes 45 and the engagement grooves 46 when the engagement claws 80 move to the setting position G2.

According to this configuration, the mixing drum 3 can be mounted simply by placing the mixing drum 3 on the rotating disc 31 and rotating the rotating disc 31 at a predetermined angle in the setting direction D1.

The rotating disc 31 has the locking grooves 49 that engage with the engagement claws 80 and restrict the mixing drum 3 from rotating relative to the rotating disc 31 in the rotational direction, and can be repositioned to the attachment position P1, where the mixing drum 3 is placed, and the operating position P2, which is a position raised from the attachment position P1 and where the mixing drum 3 is rotated. The engagement claws 80 engage with the locking grooves 49 when the rotating disc 31 is set to the operating position P2 in the setting position G2.

According to this configuration, the mixing drum 3 can be prevented from being detached from the rotating disc 31.

The rotating disc 31 has the rotation transmitting portions 47c that contact to the engagement claws 80 to transmit the rotational force to the engagement claws 80 when the engagement claws 80 are set to the setting position G2, and the restriction walls 47d that are forward portions of the rotation transmitting portions 47c in the setting direction D1 and restrict the mixing drum 3 from being disengaged from the rotating disc 31 with the engagement claws 80 engaging with the restriction walls 47d. The locking grooves 49 are formed under the restriction walls 47d.

According to this configuration, the structures of the engagement claws 80 and the locking grooves 49 can be simplified.

The rotating disc 31 has the upper plate 31A and the lower plate 31B stacked on and fixed to the lower surface of the upper plate 31A. The upper plate 31A has the upper through holes 47 formed through the upper plate 31A, and the lower plate 31B has the lower through holes 48 formed through the lower plate 31B and connected to the upper through holes 47. The insertion holes 45 are formed of the upper through holes 47 and the lower through holes 48, the rotation transmitting portions 47c are constituted of the forward end portions of the upper through holes 47 in the setting direction D1, and the engagement grooves 46 are formed through the upper plate 31A.

According to this configuration, the insertion holes 45, the engagement grooves 46, and the rotation transmitting portions 47c can be easily formed.

The locking grooves 49 are formed through the lower plate 31B and continuous with the lower through holes 48.

According to this configuration, the locking grooves 49 can be formed easily.

The mixing drum 3 has the attachment plate 73 that is attached to the bottom surface of the mixing drum 3. The engagement claws 80 have the base pieces 80a that extend from the attachment plate 73 and contact to the rotation transmitting portions 47c, and the engagement pieces 80b that extend from the base pieces 80a and engage with the locking grooves 49 and engage with the restriction walls 47d.

According to this configuration, the structure can be simplified.

The ingredient mixer 1 includes the machine body 2, the mixing drum 3 supported on the machine body 2 rotatably about the axis XI of the mixing drum 3 defining an axial direction XI and configured to rotate to mix a plurality of ingredients housed in the inside thereof, and the air blower to generate a cooling air that is fed to the inside of the mixing drum 3. The mixing drum 3 includes the drum body 6 having one and the other end surfaces in the axial direction XI, the one end surface being open to serve as the opening portion of the drum body 6, and the other end surface being closed to serve as the bottom portion 5 of the drum body 6, and the drum lid 8 to close the opening portion 7 of the drum body 6. The drum lid 8 includes the body wall 105 tapered in the axial direction XI opposite to the bottom portion 5. The body wall 105 includes the cooling-air inlet 21 through which the cooling air is introduced to the inside of the mixing drum 3, and the at the least one cooling-air outlet 108 through which the cooling air is discharged from the inside of the mixing drum 3.

According to this configuration, the cooling performance can be improved by discharging the cooling air from the at least one cooling air outlet 108 after cooling the ingredients.

The cooling-air inlet 21 is formed at the top portion of the body wall 105, and the at least one cooling-air outlet 108 is formed between the top portion 105a and the base portion 105b of the body wall 105 opposite to the top portion 105a.

According to this configuration, it is possible to suppress ingredients from being discharged from the cooling-air outlets 108 and also to suppress the introduced cooling air from being discharged directly.

The at least one cooling-air outlet 108 includes a plurality of air outlets formed at intervals in the circumferential direction J2 of the mixing drum 3.

According to this configuration, it is possible to improve the efficiency of the cooling performance.

The air outlets are formed at symmetrical positions with respect to the center of the drum lid 8.

According to this configuration, the cooling air can be discharged evenly.

The air-guide duct 20 is provided to guide the cooling air generated by the blower 19 to the cooling-air inlet 21. The air-guide duct 20 includes the cooling-air feeding port 20c located near the cooling-air inlet 21 and directed to the center of the mixing drum 3.

According to this configuration, the ingredients can be efficiently cooled.

The end portion 20d of the cooling-air feeding port 20c may be parallel to the cooling-air inlet 21.

The ingredient mixer 1 includes the agitating member 4 attached to the mixing drum 3 to agitate the ingredients. The drum lid 8 includes the circumferential wall 103 circumferentially surrounding the wall of the drum body 6 defining the opening portion 7, and the annular wall 104 extending inward from the end of the circumferential wall 103 in a radial direction of the mixing drum 3, having a diametrically inner end connected to an end portion of the body wall 105 on the opening portion side, and restricting the agitating member 4 from moving in the axial direction XI.

According to this configuration, by using not the drum lid 8 but the annular wall portion 104 to restrict the movement of the agitating member 4 in the axis XI direction, the movement of the agitating member 4 can be restricted no matter where the drum lid 8 is located in the circumferential direction J2 relative to the drum body 6.

In addition, the drum lid 8 is configured to allow the agitating member 4 to be housed inside the circumferential wall 103.

According to this configuration, loss of the agitating member 4 can be prevented.

The ingredient mixer 1 includes the machine body 2, and the mixing drum 3 supported on the machine body 2 rotatably about the axis XI of the mixing drum 3 defining the axial direction XI thereof and configured to rotate to mix a plurality of ingredients housed in the inside thereof. The machine body 2 includes the rotating disc 31 on which the mixing drum 3 is mounted, and the plurality of rollers 44 that contact the mixing drum 3 to position the mixing drum 3 when the mixing drum 3 is attached to the rotating disc 31.

According to this configuration, the mixing drum 3 can be positioned by the plurality of rollers 44 in attaching the mixing drum 3 to the rotating disc 31, and the mixing drum 3 can be easily attached to the machine body 2.

The rotating disc 31 can be repositioned to the attachment position P1, where the mixing drum 3 is placed, and the operating position P2, which is a position raised from the attachment position P1 and where the mixing drum 3 is rotated. The mixing drum 3 is inclined upwardly from the front of the machine body toward the back when the rotating disc 31 is in the operating position P2. The plurality of rollers 44 support the lower portion of the mixing drum 3 when the rotating disc 31 is in the operating position P2.

According to this configuration, the lower portion of the mixing drum 3 can be supported by the rollers 44 in moving the rotating disc 31 from the attachment position P1 to the operating position P2 or in rotating the mixing drum 3 in the operating position P2. This allows the mixing drum 3 to rotate stably and also reduces the load acting on the part where the mixing drum 3 is mounted in the rotating disc 31.

In addition, the plurality of rollers 44 can rotate with the rotation of the mixing drum 3.

According to this configuration, the rotation of the mixing drum 3 can be well supported.

The ingredient mixer 1 includes, in the mixing drum 3, the agitating member 4 arranged to transverse the mixing drum 3. The mixing drum 3 includes the drum body 6 having one and the other end surfaces in the axial direction XI. The one end surface is open to serve as the opening portion of the drum body 6, and the other end surface is closed to serve as the bottom portion 5 of the drum body 6. The drum body 6 includes the retaining grooves 93 extending in the axial direction XI on the inner surface of the drum body 6 and retaining the agitating member 4, and the cylindrical circumferential wall 97 in contact with the rollers 44. The circumferential wall 97 is formed on a portion of the drum body 6 closer to the bottom portion 5 than the retaining grooves 93.

According to this configuration, the retaining grooves 93 that retain the agitating member 4 and the cylindrical circumferential wall 97 to which the rollers 44 contact can be formed well.

The mixing drum 3 includes the attachment plate 73 that is attached to the rotating disc 31, and the attachment plate 73 has the engagement claws 80 that are inserted into the through holes 45 formed in the rotating disc 31 and can restrict the attachment plate 73 from being detached from the rotating disc 31 by rotating the mixing drum 3 at a predetermined angle from the position where the engagement claws 80 are inserted through the through holes 45. The engagement claws 80 can be inserted through the insertion holes 45 with the plurality of rollers 44 in contact with the mixing drum 3.

According to this configuration, the insertion of the engagement claws 80 into the insertion holes 45 can be easily performed.

The ingredient mixer 1 includes the machine body 2, and the mixing drum 3 rotatably supported on the machine body 2 and configured to rotate to mix a plurality of ingredients housed inside. The machine body 2 includes the support frame 10 on which the mixing drum 3 is rotatably mounted, and the main frame 9 on which the support frame 10 is swingably mounted. The support frame 10 can be repositioned between the attachment position P1 where the mixing drum 3 is mounted in an upright position and the operating position P2 where the mixing drum 3 is rotated in a position inclining upwardly toward the back of the machine body 2. The main frame 9 is provided with the operation lever 50 to operate the support frame 10 between the attachment position P1 and the operating position P2.

According to this configuration, the posture of the mixing drum 3 can be changed by operating the operation lever, so that the posture of the mixing drum 3 can be easily changed and operated.

The operation lever 50 can be operated between the first operation position R1 to move the support frame 10 to the attachment position P1 and the second operation position R2 to move the support frame 10 to the operating position P2, and is inclined downwardly toward the front of the machine body 2 in the first operation position R1, and is inclined upwardly toward the front in the second operation position R2.

According to this configuration, in changing the support frame 10 from the attachment position P1 to the operating position P2, the operation lever 50 is operated from the first operation position R1 which is inclining downwardly toward the front of the machine body 2 to the second operation position R2 which is inclining upwardly toward the front of the machine body 2. In other words, the operation lever 50 is not operated toward the back of the machine body 2 beyond the position where the operation lever 50 stands vertically in operating the support frame 10 from the attachment position P1 to the operating position P2, so that the machine body 2 can be suppressed from being lifted by the operation of the operation lever 50.

The support frame 10 can be moved to the take-out position P3 where the mixing drum 3 takes a posture inclining upwardly forward and ingredients housed inside are taken out. The operation lever 50 can be operated to the third operation position R3 to move the support frame 10 to the take-out position P3, and the operation lever 50 is in a posture inclining downwardly toward the front in the third operation position R3 and has a larger inclination angle to the horizontal direction than the inclination angle of the first operation position R1.

According to this configuration, the operation lever 50 is easily operated in operating the support frame 10 from the attachment position P1 to the take-out position P3.

The main frame 9 includes the frame body 11, the first side frame 12 extending from one side of the frame body 11 to the front, the second side frame 13 extending from the other side of the frame body 11 to the front, and the connecting frame 14 connected to the front portions of the first side frame 12 and the second side frame 13 to each other. The support frame 10 includes the first swing frame 25 swingably supported by the first side frame 12, the second swinging frame 26 swingably supported by the second side frame 13, and the support stand 27 connecting the first swing frame 25 and the second swinging frame 26 and attached to the mixing drum 3. The support stand 27 includes the first contacting wall (that is, the second wall 27b2) that contacts to the connecting frame 14 at the operating position P2 of the support frame 10, and the second contacting wall (that is, the third wall 27b3) that contacts to the connecting frame 14 at the take-out position P3 of the support frame 10.

According to this configuration, the load acting on the attachment portion of the operation lever 50 can be reduced by making the support frame 10 contact to the connecting frame 14 when the support frame 10 is positioned in the operating position P2 or the take-out position P3. The machine body 2 includes the rotating disc 31 that is rotatably attached to the support stand 27 and to be attached to the mixing drum 3, and the support stand 27 has the plurality of rollers 44 located on the back surface of the rotating disc 31. The rotating disc 31 has a posture inclining downwardly toward the back in the attachment position P1 of the support frame 10. The mixing drum 3 is attached to the rotating disc 31 with the plurality of rollers 44 in contact with the rotating disc 31.

According to this configuration, the mixing drum 3 can be easily attached to the rotating disc 31.

The machine body 2 includes the drive motor 40 that is located on the support frame 10 and drives to rotate the mixing drum 3, the controller 18 that is located on the main frame 9 and controls the drive motor 40, and the rotating member 28 that is supported on the main frame 9 rotatably around the swing axis X2 and integrally rotatable with the operation lever 50 and the support frame 10 and has the harness through path 68 through which a harness 67 is arranged from the drive motor 40 to the controller 18. The harness through path 68 has the first through portion 68A into which the harness 67 is inserted from the drive motor 40 side, the first through portion 68A being formed along the swing axis X2 at the center of the rotating member 28, and the second through portion 68B through which the harness 67 arranged from the first through portion 68A to the controller 18 side passes, the second through portion 68B being formed from the first through portion 68A to the outer circumferential surface of the rotating member.

According to this configuration, the harness 67 can be prevented from being twisted even when the operation lever 50 is swung around the swing axis X2.

The ingredient mixer 1 has, in the drum body 6, the agitating member 4 arranged to transverse the drum body 6 and configured to agitate the ingredients. The machine body 2 has the retaining member 24 that is located on the main frame 9 and configured to retain the drum lid 8 with the agitating member 4 housed in the drum lid 8.

According to this configuration, the agitating member 4 and the drum lid 8 can be held compactly.

In the above description, the embodiment of the present invention has been explained. However, all the features of the embodiment disclosed in this application should be considered just as examples, and the embodiment does not restrict the present invention accordingly. A scope of the present invention is shown not in the above-described embodiment but in claims, and is intended to include all modifications within and equivalent to a scope of the claims.

### [DESCRIPTION OF THE REFERENCE NUMERAL]

- 2: Machine body
- 3: Mixing drum
- 4: Agitating member
- 5: Bottom portion
- 6: Drum body
- 7: Opening
- 8: Drum lid
- 19: Air blower
- 20: Air-guide duct
- 20c: Cooling-air feeding port
- 20d: End portion
- 21: Cooling-air inlet
- 103: Circumferential wall
- 104: Annular wall
- 105: Body wall
- 105a: Top portion
- 105b: Base portion
- 108: Cooling-air outlet
- 108A: Air outlet (First air outlet)
- 108B: Air outlet (Second air outlet)
- 114A: Air outlet
- 114B: Air outlet
- 114C: Air outlet
- 114D: Air outlet
- 114E: Air outlet
- 114F: Air outlet
- El: Radial direction
- XI: Axis
- J2: Circumferential direction

## Claims

1. An ingredient mixer comprising:
a machine body;
a mixing drum supported on the machine body rotatably about an axis of the mixing drum defining an axial direction thereof and configured to rotate to mix a plurality of ingredients housed in an inside thereof; and
an air blower to generate a cooling air that is fed to the inside of the mixing drum, wherein
the mixing drum includes:
a drum body having one and the other end surfaces in the axial direction, the one end surface being open to serve as an opening portion of the drum body, and the other end surface being closed to serve as a bottom portion of the drum body; and
a drum lid to close the opening portion of the drum body,
the drum lid includes a body wall tapered in the axial direction opposite to the bottom portion of the drum body, and
the body wall includes:
a cooling-air inlet through which the cooling air is introduced to the inside of the mixing drum; and
at least one cooling-air outlet through which the cooling air is discharged from the inside of the mixing drum.

2. The ingredient mixer according to claim 1, wherein
the cooling-air inlet is formed at a top of the body wall, and
the at least one cooling-air outlet is formed between the top and a base of the body wall opposite to the top.

3. The ingredient mixer according to claim 1 or 2, wherein
the at least one cooling-air outlet includes a plurality of air outlets arranged at intervals in a circumferential direction of the mixing drum.

4. The ingredient mixer according to claim 3, wherein
the air outlets are formed at symmetric positions with respect to a center of the drum lid.

5. The ingredient mixer according to any one of claims 1 to 4, comprising:
an air-guide duct to guide the cooling air generated by the air blower to the cooling-air inlet, wherein
the air-guide duct includes a cooling-air feeding port that is located in vicinity of the cooling-air inlet and faces a center of the mixing drum.

6. The ingredient mixer according to claim 5, wherein
an end portion of the cooling-air feeding port is parallel to the cooling-air inlet.

7. The ingredient mixer according to any one of claims 1 to 6, comprising
an agitating member attached to the mixing drum to agitate the ingredients, wherein
the drum lid includes:
a circumferential wall circumferentially surrounding a wall of the drum body defining the opening portion; and
an annular wall extending inward from an end of the circumferential wall in a radial direction of the mixing drum, having a diametrically inner end connected to an end portion of the body wall on the opening portion side, and restricting the agitating member from moving in the axial direction.

8. The ingredient mixer according to claim 7, wherein
the drum lid is configured to allow the agitating member to be housed inside the circumferential wall.

9. An ingredient mixer comprising:
a machine body;
a mixing drum supported on the machine body rotatably about an axis of the mixing drum defining an axial direction thereof and configured to rotate to mix a plurality of ingredients housed in an inside thereof; and
at least one agitating member attached in the inside of the mixing drum to agitate the ingredients, wherein
the mixing drum includes a drum body having one and the other end surfaces in the axial direction of the mixing drum, the one end surface being open to serve as an opening portion of the drum body, and the other end surface being closed to serve as a bottom portion of the drum body,
the at least one agitating member crosses the drum body in a transverse direction and contacts to the bottom portion of the drum body, and
the drum body includes at least one protrusion protruding from the bottom portion, the at least one protrusion being offset from the at least one agitating member in a direction crossing the transverse direction to contact the at least one agitating member.

10. The ingredient mixer according to claim 9, wherein
the at least one agitating member includes:
a first agitating member located at an eccentric position with respect to the axis; and
a second agitating member juxtaposed with the first agitating member in a radial direction of the mixing drum and located at another eccentric position opposite to the first agitating member with respect to the axis, and
the at least one protrusion includes:
a plurality of first protrusions opposite to the axis with respect to the first agitating member; and
a plurality of second protrusions opposite to the axis with respect to the second agitating member.

11. The ingredient mixer according to claim 9 or 10, wherein
the mixing drum includes an attachment plate attached to the bottom portion of the drum body and rotatably attached to the machine body, and
the at least one protrusion includes:
a protruding body formed integrally with the drum body to protrude from the bottom portion toward the opening portion; and
a nut into which an attachment tool for attachment of the attachment plate is screwed, the nut being embedded in the protruding body.

12. The ingredient mixer according to claim 11, wherein
the attachment plate includes an engagement claw configured to engage with the machine body to prevent the attachment plate from being separate from the machine body, and
the drum body includes, on the bottom portion, a housing recess portion configured to house the attachment plate.

13. The ingredient mixer according to claim 11 or 12, wherein
the machine body includes:
a rotation shaft rotatable around the axis;
a rotating disc to which the attachment plate is attached; and
a fixture to fix the rotating disc to the rotation shaft,
the bottom portion includes a recess portion to house a head of the fixture inserted through a through hole formed in the attachment plate, and
the through hole includes:
a small-diameter portion adjacent to the head of the fixture; and
a large-diameter portion having a diameter larger than diameters of the small-diameter portion and the recess portion.

14. The ingredient mixer according to any one of claims 9 to 13, wherein
the machine body is provided with a plurality of rollers to guide rotation of the mixing drum,
the drum body includes:
a retaining groove extending in the direction of the axis and configured to retain the at least one agitating member, the retaining groove being formed on an inner surface of the drum body; and
a cylindrical circumferential wall in contact with the rollers, the cylindrical circumferential wall being formed on a portion of the drum body closer to the bottom portion than the retaining groove,
the at least one agitating member has a portion protruding from the retaining groove toward the bottom portion, and
the protrusions support the portion of the at least one agitating member protruding from the retaining groove toward the bottom portion.
